Europäisches Patentamt

European Patent Office

Office européen des brevets

(11) Numéro de publication: **0 306 376 B1**

(19)

(12) **FASCICULE DE BREVET EUROPEEN**

(45) Date de publication de fascicule du brevet: **30.12.92** (51) Int. Cl.⁵: **A01N 37/40, A01N 25/04**

(21) Numéro de dépôt: **88402028.0**

(22) Date de dépôt: **03.08.88**

(54) **Dispersion acqueuse ou hydroalcoolique stable à base de dérivés d'oxynil, et composition herbicide en comportant et procédé de traitement selectif mettant en oeuvre ladite composition herbicide.**

(30) Priorité: **06.08.87 FR 8711230**

(43) Date de publication de la demande:
**08.03.89 Bulletin 89/10**

(45) Mention de la délivrance du brevet:
**30.12.92 Bulletin 92/53**

(84) Etats contractants désignés:
**AT BE DE ES FR GB GR IT NL**

(56) Documents cités:
**EP-A- 0 064 478**
**FR-A- 1 408 238**
**FR-A- 1 442 294**
**FR-A- 2 332 053**
**GB-A- 2 126 897**

(73) Titulaire: **COMPAGNIE FRANCAISE DE PRO-
DUITS INDUSTRIELS**
**28, Boulevard Camélinat**
**F-92233 Gennevilliers(FR)**

(72) Inventeur: **Schapira, Joseph**
**32, rue Miollis**
**F-75015 Paris(FR)**
Inventeur: **Pecheur, Jacques**
**6, Allée du Moulin Joly**
**F-92700 Colombes(FR)**
Inventeur: **Vincent, Jacques**
**21 F Rue des Closeaux**
**F-78750 Mareil Marly(FR)**
Inventeur: **Schild, Jacques**
**9, rue Léonard de Vinci**
**F-92230 Gennevilliers(FR)**
Inventeur: **Bosselin, Bruno**
**4, Place du Coteau**
**F-77500 Chelles(FR)**

(74) Mandataire: **Koch, Gustave**
**Cabinet PLASSERAUD 84, rue d'Amsterdam**
**F-75009 Paris(FR)**

**Description**

L'invention a pour objet une dispersion aqueuse ou hydroalcoolique stable à base de dérivés d'oxynil ainsi qu'une composition herbicide en comportant, le terme générique oxynil désignant l'ioxynil et le bromoxynil qui constituent des produits herbicides bien connus.

Elle a également pour objet un procédé de traitement herbicide sélectif mettant en oeuvre la susdite composition herbicide.

Bromoxynil est le nom commun du 3.5-dibromo-4-hydroxybenzonitrile et ioxynil celui du 3,5-diiodo-4-hydroxybenzonitrile.

C'est par le terme consacré et accepté dans le métier de "flow aqueux" qu'on désigne les dispersions aqueuses ou hydroalcooliques stables de matières notamment herbicides à l'état solide d'une granulométrie substantiellement inférieure à environ 5 μm: ces dispersions sont stabilisées à l'aide d'agents tensio-actifs, de produits dispersants et de produits épaississants et/ou de colloïdes protecteurs qui leur confèrent une bonne fluidité tout en retardant au maximum la sédimentation.

La dispersion est dite hydroalcoolique lorsqu'elle contient un ou plusieurs alcools du type glycol, par exemple l'éthylèneglycol, le propylèneglycol ou le butoxyéthanol, la proportion de ces glycols dans la dispersion allant de 1 à 10% en poids, de préférence de 3 à 7%.

Dans la pratique, les flows doivent être stables pendant des périodes allant jusqu'à deux ans; leur constitution est analogue à celle des peintures.

Il existe déjà des flows à base de bromoxynilphénol.

Mais les oxynils sous la forme phénol sont moins actifs du point de vue herbicide que lorsqu'ils sont mis en oeuvre sous la forme ester, à doses de matière active égales à l'hectare, exprimées en équivalent phénol (e.p.).

C'est la raison pour laquelle l'homme de l'art préfère a priori avoir recours aux esters d'oxynil --notamment aux octanoates et aux associations octanoates/butyrates-- puisque ceux-ci, du fait de leur plus grande activité, nécessitent des doses d'application exprimées en équivalent matière active à l'hectare plus faibles.

Toutefois, cette activité plus grande entraîne fréquemment des problèmes de phytotoxicité vis-à-vis de la culture intéressée.

Et, de plus, l'application des esters de qualité technique --dans ce qui suit, il est toujours question d'esters de qualité technique-- sous forme de flow n'a jamais pu être envisagée en raison du fait que, si tous les esters d'oxynil répondent bien à la première des trois conditions précisées ci-après --et qui doivent être satisfaites pour qu'une matière active donnée puisse être mise sous forme de flow--, la plupart d'entre eux ne répondent pas simultanément aux deux autres, lesdites conditions étant que la matière active concernée

- est insoluble en milieu aqueux ou hydroalcoolique,
- présente un point de fusion suffisamment élevé pour permettre le broyage jusqu'à une granulométrie substantiellement inférieure à environ 5 μm et
- ne présente pas une tendance à l'hydrolyse en présence d'eau.

En effet, les esters à chaîne relativement longue et notamment l'octanoate qui est l'ester le plus utilisé, présentent un point de fusion trop faible pour être amenés par broyage à la granulométrie indiquée plus haut alors que la plupart de ceux à chaîne relativement plus courte font preuve d'une certaine tendance à l'hydrolyse en présence d'eau, une telle hydrolyse étant donc à craindre dès leur mise sous forme de flow.

Le mérite de la Société Demanderesse est par conséquent d'avoir surmonté ce préjugé et d'avoir trouvé qu'il était possible de préparer un flow à base d'ester d'oxynil dès lors que le point de fusion de cet ester est supérieur à 65°C.

Et ce mérite est d'autant plus grand que, de façon totalement inattendue, l'ester d'oxynil, par le biais du flow ainsi constitué, non seulement présente une activité herbicide voisine de celle qu'il présente sous sa forme classique la plus efficace --à savoir celle de concentré émulsionnable dans laquelle il est solubilisé-- mais encore et surtout est beaucoup moins phytotoxique que cette forme classique la plus efficace, notamment dans le cas de son application sur cultures de maïs, vignes, vergers, céréales à paille, graminées prairiales, cultures légumières et légumineuses.

Le flow ainsi établi constitue donc un produit industriel nouveau.

En conséquence, la dispersion aqueuse ou hydroalcoolique stable ou flow aqueux à base d'au moins un dérivé d'oxynil selon l'invention est caractérisée par le fait que le dérivé d'oxynil est constitué par un ester de point de fusion supérieur à 65°C.

Et la composition herbicide conforme à l'invention est caractérisée par le fait qu'elle comporte une dispersion aqueuse ou hydroalcoolique stable ou flow aqueux à base d'un ester d'oxynil de point de fusion supérieur à 65°C.

Enfin, le procédé de traitement herbicide sélectif des cultures du groupe comprenant celles du maïs, des vignes et vergers, des céréales à paille, des graminées prairiales, des cultures légumières et des légumineuses, est caractérisé par le fait qu'on leur applique une quantité efficace de la composition herbicide conforme à l'invention.

Suivant un mode de réalisation avantageux, la composition herbicide conforme à l'invention comporte de plus un flow à base d'une ou plusieurs triazines et/ou d'urées substituées et/ou d'amides et/ou de diphényléthers et/ou d'un ou plusieurs dérivés de l'acide benzoïque et/ou d'un ou plusieurs dérivés picoliniques.

Suivant un autre mode de réalisation avantageux, la composition herbicide conforme à l'invention comporte, outre le flow à base d'ester d'oxynil et éventuellement outre les autres flows mentionnés ci-dessus, un autre herbicide sous forme de solution aqueuse sous réserve que cette solution aqueuse n'exerce aucun effet hydrotrope solubilisant sur l'ester d'oxynil, notamment une solution aqueuse d'aminotriazole et/ou une solution aqueuse de glyphosate.

L'invention vise encore d'autres dispositions dont il sera plus explicitement question ci-après.

Et elle pourra être bien comprise à l'aide du complément de description qui suit et des exemples qui ne sont pas limitatifs mais concernent des modes de réalisation avantageux.

Se proposant, par conséquent, d'établir le flow aqueux ainsi que la composition herbicide selon l'invention, on s'y prend comme suit ou de façon équivalente.

On sélectionne tout d'abord un ester d'oxynil de point de fusion supérieur à 65°C, ainsi que les adjuvants --c'est-à-dire les agents tensio-actifs, les produits dispersants et les produits épaississants et/ou les colloïdes protecteurs-- nécessaires pour assurer la stabilité du flow à base d'ester d'oxynil.

Parmi les esters d'oxynil susceptibles de convenir, on cite ceux du groupe comprenant
- les acétate, propionate, butyrate, isobutyrate et pivalate de bromoxynil dont les points de fusion sous la forme technique sont respectivement de 154°C, 115°C, 82°C, 103°C et 118°C,
- les acétate, propionate, butyrate, isobutyrate et pivalate d'ioxynil dont les points de fusion sous la forme technique sont respectivement de 204°C, 157°C, 118°C, 138°C et 142°C.

Les butyrates de bromoxynil et d'ioxynil sont tout particulièrement préférés.

Les triazines susceptibles de convenir sont choisies dans le groupe comprenant l'atrazine, la simazine, la métribuzine, la cyanazine, la terbutryne et la terbuthylazine : les urées substituées peuvent être choisies dans le groupe comprenant le chlortoluron, l'isoproturon, le diuron, le néburon et le méthabenzthiazuron.

Les amides susceptibles de convenir peuvent être choisis dans le groupe comprenant le métolachlore, le métazachlore, le diflufenican et l'isoxaben.

A titre de diphényléthers utilisables, on peut citer le bifénox et le chlométhoxynil, à titre de dérivé de l'acide benzoïque, on peut avoir recours à l'acide 2-méthoxy-3,6-dichlorobenzoïque ou dicamba et, à titre de dérivé picolinique, l'acide 3,6-dichloropicolinique connu sous le nom de clopyralide.

Parmi les agents tensio-actifs susceptibles de convenir, on cite ceux du groupe comprenant :
- les agents tensio-actifs non ioniques et plus particulièrement les alcools gras polyéthoxylés, les huiles de ricin polyéthoxylées, les alcoylphénols polyéthoxylés tels que le nonylphénol condensé en moyenne avec 10 moles d'oxyde d'éthylène et les polyarylphénols polyéthoxylés tels que le tristyrylphénol condensé en moyenne avec 18 modes d'oxyde d'éthylène, et/ou
- les agents tensio-actifs anioniques tels que les dérivés sulfatés et/ou phosphatés des agents non ioniques précédents, éventuellement neutralisés sous forme de sels alcalins ou d'alcanolamine ainsi que les alcoylsulfosuccinates tels que le dioctylsulfosuccinate et le diisobutylsulfosuccinate de métaux alcalins.

Parmi les produits dispersants susceptibles de convenir, on cite ceux du groupe comprenant les polynaphtylméthanepolysulfonates de sodium, de potassium, d'ammonium et/ou d'alcanolamine, les poly-(alcoylnaphtyméthane)polysulfonates de métaux alcalins, d'ammoniaque et/ou d'alcanolamine, ces derniers pouvant contenir une certaine proportion de monomère; on peut également avoir recours aux dispersants polycarboxyliques tels que les polymères de l'acide acrylique et/ou de l'anhydride maléique et de leurs dérivés.

Parmi les agents épaississants et/ou colloïdes protecteurs susceptibles de convenir, on cite les laponites, les attapulgites, les bentonites, éventuellement traitées, et les polymères d'oxyde d'éthylène à haut poids moléculaire, tels que le POLYOX® et les hétéropolysaccharides obtenus par fermentation du Xanthomonas Campestris comme le RHODOPOL®23 fabriqué par Rhône-Poulenc ou le KELZAN S® de la Société Kelco.

Une fois que l'on a sélectionné le ou les susdits esters et adjuvants, on fond le ou les susdits esters et on les disperse en présence d'un ou plusieurs tensioactifs sous forte agitation dans de l'eau avantageusement chaude pouvant contenir les autres adjuvants.

Concernant les adjuvants de stabilisation, leur dose en % en poids sur la formulation finale est
- pour les tensio-actifs utilisés seuls ou associés entre eux, comprise entre 0,1% et 15% en poids,
- pour les dispersants utilisés seuls ou associés, entre 0,05% et 15% en poids,
- pour les épaississants ou colloïdes protecteurs, entre 1 pour 100.000 et 1 pour 100 en poids, généralement entre 1 pour 10.000 et 1 pour 1000 selon les produits mis en oeuvre.

On broie la dispersion ainsi obtenue de façon à amener la granulométrie de l'ester d'oxynil substantiellement à une valeur inférieure à 5 µm.

On ajoute ensuite avantageusement une proportion efficace de produit antimousse tel que le diméthylpolysiloxane.

La dispersion ainsi obtenue est désaérée sous vide et filtrée en vue d'éliminer d'éventuels grumeaux.

Le produit résultant constitue le flow recherché.

On combine ce flow éventuellement avec une dispersion aqueuse stable ou flow de triazine et/ou d'urée substituée et/ou de diphényléther et/ou d'amide et/ou une solution aqueuse de sel de l'acide benzoïque et/ou de dérivé picolinique et/ou d'aminotriazole.

Les rapports pondéraux entre ces diverses matières actives peuvent être fixés entre 1 et 25 selon les substances considerées et les teneurs en matières actives sont choisies
- entre 25 et 500 g/l d'équivalent oxynil amené sous forme d'ester et présenté sous forme de flow,
- entre 50 et 450 g/l pour les triazines sous forme de flow,
- entre 50 et 450 g/l pour les urées substituées sous forme de flow.
- entre 50 et 250 g/l pour les diphényléthers sous forme de flow,
- entre 50 et 600 g/l pour les amides sous forme de flow
- entre 100 et 200 g/l pour les sels d'acide benzoïque sous forme de solution aqueuse,
- entre 10 et 200 g/l pour les dérivés picoliniques sous forme de solution aqueuse,
- entre 20 et 150 g/l pour l'aminotriazole.

La teneur globale de la composition herbicide finale en ses diverses matières actives n'excéde généralement pas 600 g/l.

Les dispersions stables ou flows à base d'une ou plusieurs triazines, et/ou à base d'urées substituées et/ou d'amides et/ou de diphényléthers et/ou de dérivés d'acide benzoïque et/ou de dérivés picoliniques et/ou d'aminotriazoles, sont préparées de la manière indiquée plus haut à propos des flows d'ester d'oxynil à l'exception de l'étape initiale de fusion puisque ces produits se présentent déjà sous forme de poudres.

Les détails relatifs à la préparation et à la constitution des compositions herbicides conformes à l'invention résultent des exemples 1 à 34 qui suivent.

EXEMPLE 1

42,8 parties en poids de butyrate de bromoxynil technique (point de fusion 82°C, teneur en équivalent bromoxynil de 74,8%) et 2 parties en poids de nonylphénol (polyéthoxylé en moyenne avec 10 moles d'oxyde d'éthylène) sont fondues ensemble et versées sous forte agitation dans une solution aqueuse de température ambiante constituée de 40,1 parties en poids d'eau, de 5 parties en poids d'éthylèneglycol et de 5 parties en poids d'un sel de triéthanolamine d'un ester phosphorique d'un polyarylphénol polyéthoxylé en moyenne avec 18 moles d'oxyde d'éthylène tel que le SOPROPHOR® FL de Rhône-Poulenc.

La dispersion ainsi obtenue est broyée dans un broyeur à billes de façon à obtenir une granulométrie essentiellement inférieure à 5 microns. On ajoute ensuite 1 partie en poids d'une émulsion à 30% de diméthylpolysiloxane tel que le RHODORSIL 426® de Rhône-Poulenc et 4 parties en poids d'une dispersion aqueuse contenant 4% de RHODOPOL®23 et 0,1% de solution aqueuse à 30% de formol.

La dispersion blanchâtre à brun très clair qui en résulte est désaérée sous vide et filtrée sur un tamis de 200 microns.

Le flow ainsi obtenu présente les caractéristiques suivantes :
- aspect : liquide légèrement visqueux opaque blanc à brun très clair, homogène (sans déphasage et sans sédiment)
- teneur : 400 g/l d'équivalent bromoxynil, sous forme de butyrate de bromoxynil
- densité à 20°C : 1,250
- teneur en matières sèches (105°C, 1 heure) : 42%
- suspensivité selon la méthode CIPAC (Collaborative International Pesticide Analytical Council) MT 15.1 avec de l'eau standard CIPAC, référence D, à 20°C, prise d'essai 24,4 g après 1 heure : ≥ 90%
- tenue au froid : dispersion coulable sans cristaux à -6°C
- viscosité à 20°C : coupe AFNOR n°4 : 40 s ± 5 s

- acidité libre : exprimée en mg de KOH/g : 5,25 exprimée en % de bromoxynil (sous forme phénol) : 2.6.

L'évolution du vieillissement à 54°C résulte des données numériques rassemblées dans le tableau I.

TABLEAU I

| Temps écoulé t | aspect | viscosité (AFNOR n°4) | acidité (en mg KOH/g) | acidité en % de bromoxynil libre |
|---|---|---|---|---|
| 0 | homogène déphasage = 0 sédiment = 0 | 40 ± 5 | 4,3 | 2,1 |
| 1 mois | déphasage : très léger sédiment = 0 | 60 ± 5 | 6,4 | 3,2 |
| 2 mois | déphasage: léger sédiment = 0 | 56 ± 5 | 6,9 | 3,4 |

Il résulte de ces données que l'hydrolyse de l'ester butyrique est négligeable, même à 54°C.

Sur un autre échantillon fabriqué selon le même procédé, on a vérifié l'absence d'hydrolyse, après vieillissement à 54°C, par chromatographie en phase gazeuse ou CPG, les résultats étant réunis dans le tableau II ci-après.

TABLEAU II

| Temps écoulé | Teneur en équivalent bromoxynil sous forme ester par CPG | Acidité en mg KOH/g |
|---|---|---|
| 0 | 386,4 | 5,2 |
| 1 mois | 388,1 | 5,6 |

EXEMPLE 2

On procède de la façon indiquée à l'exemple 1 à la différence près que l'on met en oeuvre 39,9 parties en poids de butyrate d'ioxynil technique (point de fusion 118°C, teneur en équivalent ioxynil de 78,8%) au lieu des 42,8 parties en poids de butyrate de bromoxynil, ainsi que 2 parties en poids d'alcoylphénol polyéthoxylé en moyenne avec 16,5 moles d'oxyde d'éthylène au lieu de l'alcoylphénol à 10 moles, et 44 parties en poids d'eau au lieu de 40,1.

Le flow obtenu présente les caractéristiques suivantes :
- aspect : liquide légèrement visqueux opaque blanc à brun très clair, homogène (sans déphasage et sans sédiment)
- teneur : 400 g/l d'équivalent ioxynil, sous forme de butyrate d'ioxynil
- densité à 20°C : 1,274
- teneur en matières sèches : 41%
- suspensivité selon la méthode CIPAC (Collaborative International Pesticide Analytical Council) MT 15.1 avec de l'eau standard CIPAC, référence D, à 20°C, prise d'essai 24,9 g après 1 heure : ≧ 90%
- tenue au froid : dispersion coulable sans cristaux à -6°C
- viscosité à 20°C : coupe AFNOR n°4 : 40 s ± 5 s
- acidité libre : exprimée en mg de KOH/g : 3,25 exprimée en % d'ioxynil (phénol) : 2,15.

L'expérience de vieillissement à 54°C montre que le produit reste sous forme de liquide opaque blanc sans déphasage ni sédimentation.

L'absence d'hydrolyse a été vérifiée par chromatographie en phase gazeuse et a donné les résultats réunis dans le tableau III ci-après.

TABLEAU III

| Temps écoulé | Teneur en équivalent ioxynil sous forme ester par CPG | Acidité en mg KOH/g |
|---|---|---|
| 0 | 397,4 | 3,7 |
| 21 jours | 397,4 | 4,0 |

EXEMPLE 3

16,55 parties en poids de butyrate de bromoxynil et 0,5 partie de nonylphénol polyéthoxylé en moyenne avec 10 moles d'oxyde d'éthylène sont fondues ensemble et versées à la température ambiante et sous forte agitation dans un mélange comprenant 69,2 parties en poids d'une dispersion d'atrazine titrant 44,7% d'atrazine et commercialisée par Ciba Geigy sous la marque GESAPRIME autosuspensible, 5,75 parties en poids d'eau, 3 parties en poids d'éthylèneglycol et 3 parties en poids de SOPROPHOR®FL.

La dispersion ainsi obtenue est broyée et, comme à l'exemple 1, on ajoute l'émulsion de diméthylpolysiloxane ainsi que l'agent épaississant avant de la désaérer et filtrer.

Le flow ainsi obtenu présente les caractéristiques suivantes :
- aspect : liquide blanc opaque légèrement visqueux, homogène
- densité à 20°C : 1,162
- viscosité à 20°C : coupe AFNOR n°4 : 45 s ± 5 s
- teneur en matières sèches : 45,8%
- suspensivité selon la méthode CIPAC (Collaborative International Pesticide Analytical Council) MT 15.1 avec de l'eau standard CIPAC, référence D, à 20°C, prise d'essai 21,8 g après 1 heure : ≥ 90%
- tenue au froid : coulable sans cristaux à -5°C
- il contient 144 g/l d'équivalent bromoxynil sous forme de butyrate et 360 g/l d'atrazine.

L'expérience de vieillissement de 14 jours à 54°C par la méthode CIPAC MT 46 montre que le produit reste sous forme de liquide opaque blanc sans déphasage ni sédimentation.

EXEMPLE 4

On mélange 71,5 parties en poids d'une dispersion micronisée (c'est-à-dire amenée à une granulométrie essentiellement inférieure à 5 microns) stable de diuron titrant 42,1% en poids de matière active et contenant, à titre de mouillants-dispersants, du SOPROPHOR®FL, du nonylphénol condensé avec 10 moles d'oxyde d'éthylène et, à titre d'épaississant, du RHODOPOL®23, avec 12,1 parties en poids du flow de l'exemple 1, puis on ajoute 13,4 parties en poids d'eau et, sous bonne agitation, 3 parties en poids d'une dispersion aqueuse contenant 4% en poids de RHODOPOL®23. La dispersion blanche qui en résulte est désaérée sous vide et filtrée sur tamis de 200 microns.

Le flow ainsi obtenu présente les caractéristiques indiquées ci-après :
- aspect : liquide blanc opaque légèrement visqueux, homogène
- densité à 20°C : 1,161
- viscosité à 20°C : coupe AFNOR n°4 : 46 s
- teneur en matières sèches : 36% en poids
- suspensivité selon la méthode CIPAC (Collaborative International Pesticide Analytical Council) MT 15.1 avec de l'eau standard CIPAC, référence D, à 20°C, prise d'essai 27,7 g après 1 heure : ≥ 90%
- ce flow contient 45 g/l d'équivalent bromoxynil sous forme de butyrate et 350 g/l de diuron.

L'expérience de vieillissement effectuée de la même manière qu'à l'exemple 3 montre que le produit reste sous forme de liquide blanc opaque présentant une très légère collerette.

EXEMPLE 5

On procède comme à l'exemple 4 mais en mettant en oeuvre cette fois 12,7 parties en poids du flow de l'exemple 1, 70,7 parties en poids de la dispersion d'atrazine décrite à l'exemple 3 ainsi que 13,6 parties en poids d'eau et 3 parties en poids de la dispersion aqueuse à 4% d'épaississant préalablement dispersé, également décrite à l'exemple 4.

Après désaération et filtrage identiques à ceux de l'exemple 4, on obtient un produit ayant les caractéristiques suivantes :
- aspect : liquide blanc opaque légèrement visqueux, homogène
- densité à 20°C : 1,107
- viscosité à 20°C : coupe AFNOR n°4 : 36 s
- teneur en matières sèches : 36%
- suspensivité selon la méthode CIPAC (Collaborative International Pesticide Analytical Council) MT 15.1 avec de l'eau standard CIPAC, référence D, à 20°C, prise d'essai 27 g après 1 heure : ≧ 90%
- ce produit contient 45 g/l d'équivalent bromoxynil sous forme de butyrate et 350 g/l d'atrazine.

L'exemple 5 comparé à l'exemple 3 montre qu'il est possible, d'une part, d'associer à volonté des proportions très différentes de diverses matières actives, en l'occurrence le butyrate de bromoxynil et l'atrazine et, d'autre part, de mettre en oeuvre des modes opératoires différents puisque, dans l'exemple 3, le butyrate de bromoxynil est micronisé en présence de la dispersion d'atrazine préalablement fabriquée alors que, dans l'exemple 5, on mélange les dispersions fabriquées séparément.

L'expérience de vieillissement effectuée de la manière indiquée à l'exemple 3 montre que le produit reste sous forme de liquide opaque blanc sans déphasage ni sédimentation.

EXEMPLE 6

On procède comme à l'exemple 5 en mélangeant 6,7 parties en poids du flow de l'exemple 1 avec
- 25,35 parties en poids de la dispersion stable de diuron décrite à l'exemple 4,
- 47,85 parties en poids de la dispersion d'atrazine décrite à l'exemple 3,
- 17,1 parties en poids d'eau et
- 3 parties en poids de la dispersion aqueuse à 4% d'épaississant décrite à l'exemple 4.

Après désaération sous vide et filtration sur tamis de 200 microns, on obtient une composition présentant les caractéristiques indiquées ci-après :
- aspect : liquide blanc opaque légèrement visqueux, homogène
- densité à 20°C : 1,125
- viscosité à 20°C : coupe AFNOR n°4 : 40 s
- teneurs en matières actives: 240 g/l d'atrazine
  120 g/l de diuron
  24 g/l d'équivalent bromoxynil sous forme de butyrate.

L'expérience de vieillissement effectuée de la manière indiquée à l'exemple 3 montre que le produit reste sous forme de liquide opaque blanc sans déphasage ni sédimentation.

EXEMPLE 7

On procède comme à l'exemple 6 en mélangeant 6,6 parties en poids du flow de l'exemple 1 avec
- 23,6 parties en poids de la dispersion d'atrazine décrite à l'exemple 3,
- 50,15 parties en poids de la dispersion de diuron décrite à l'exemple 4,
- 16,65 parties en poids d'eau et
- 3 parties en poids de la dispersion aqueuse à 4% d'épaississant décrite à l'exemple 4.

La composition ainsi obtenue présente les caractéristiques suivantes :
- aspect : liquide blanc opaque, homogène
- densité à 20°C : 1,137
- viscosité à 20°C : coupe AFNOR n°4 : 45 s
- teneurs en matières actives: 120 g/l d'atrazine
  240 g/l de diuron
  24 g/l d'équivalent bromoxynil sous forme de butyrate.

L'expérience de vieillissement effectuée de la même manière qu'à l'exemple 3 montre que le produit reste sous forme de liquide opaque blanc sans déphasage ni sédimentation.

EXEMPLE 8

On procède comme précédemment en mélangeant 6,7 parties en poids du flow de l'exemple 1 avec
- 37,85 parties en poids de la dispersion de diuron décrite à l'exemple 4,
- 35,65 parties en poids de la dispersion d'atrazine décrite à l'exemple 3,
- 16,8 parties en poids d'eau et
- 3 parties en poids de la dispersion aqueuse à 4% d'épaississant décrite à l'exemple 4.

La composition ainsi obtenue présente les caractéristiques suivantes :
- aspect : liquide blanc opaque, homogène
- densité à 20°C : 1,130
- viscosité à 20°C : coupe AFNOR n°4 : 50 s
- teneur en matières actives : 180 g/l d'atrazine
  180 g/l de diuron
  24 g/l d'équivalent bromoxynil sous forme de butyrate.

L'expérience de vieillissement à 54°C montre que le produit reste sous forme de liquide opaque blanc sans déphasage ni sédimentation.

EXEMPLE 9

9,05 parties en poids d'aminotriazole technique, titrant 98% sont solubilisées dans 36,75 parties en poids d'eau. On tiédit au besoin jusqu'à 40°C pour accélérer la solubilisation.

On ajoute ensuite
- 8,5 parties en poids du flow de l'exemple 1, puis
- 42,2 parties en poids de la dispersion de diuron décrite à l'exemple 4, et enfin
- 3,5 parties en poids de la dispersion aqueuse à 4% d'épaississant décrite à l'exemple 4.

Après désaération sous vide et filtration sur tamis de 200 microns, on obtient une composition présentant les caractéristiques suivantes :
- aspect : liquide blanc opaque, homogène
- densité à 20°C : 1,130
- viscosité à 20°C : coupe AFNOR n°4 : 40 s
- teneur en matières actives : 100 g/l d'aminotriazole
  200 g/l de diuron
  30 g/l d'équivalent bromoxynil sous forme de butyrate.

Cet exemple confirme que l'on peut associer le butyrate de bromoxynil en dispersion aqueuse avec une solution aqueuse d'une autre matière active comme l'aminotriazole.

L'expérience de vieillissement effectuée de la manière indiquée à l'exemple 3 montre que le produit se présente assez rapidement sous forme de liquide opaque à fort déphasage (50 % environ).

EXEMPLE 10

On procède comme à l'exemple 9 en dissolvant 9,45 parties en poids d'aminotriazole à 98% de pureté dans 37 parties en poids d'eau puis en ajoutant :
- 8,9 parties en poids du flow de l'exemple 1,
- 41,4 parties en poids de la dispersion d'atrazine décrite à l'exemple 3, et enfin
- 3,25 parties en poids de la dispersion aqueuse à 4% d'épaississant décrite à l'exemple 4.

On désaère sous vide puis on filtre sur tamis de 200 microns et la composition ainsi obtenue présente les caractéristiques suivantes :
- aspect : liquide blanc opaque, homogène
- densité à 20°C : 1,082
- viscosité à 20°C : coupe AFNOR n°4 : 35 s
- teneur en matières actives : 100 g/l d'aminotriazole
  200 g/l d'atrazine
  30 g/l d'équivalent bromoxynil sous forme de butyrate.

L'expérience de vieillissement effectuée de la manière indiquée à l'exemple 3 montre que le produit reste sous forme de liquide opaque blanc sans déphasage ni sédimentation.

EXEMPLE 11

On procède comme à l'exemple précédent en dissolvant 6,95 parties en poids d'aminotriazole dans 31 parties en poids d'eau éventuellement tiédie puis en ajoutant :
- 5,8 parties en poids du flow de l'exemple 1,
- 26,9 parties en poids de la dispersion de diuron décrite à l'exemple 4,
- 25,35 parties en poids de la dispersion d'atrazine décrite à l'exemple 3, et
- 4 parties en poids de la dispersion aqueuse à 4% d'épaississant décrite à l'exemple 4.

A la fin de l'opération, les caractéristiques du produit ainsi obtenu sont les suivantes :

- aspect : liquide blanc opaque, homogène
- densité à 20°C : 1,105
- viscosité à 20°C : coupe AFNOR n°4 : 45 s
- teneur en matières actives : 75 g/l d'aminotriazole
  125 g/l d'atrazine
  125 g/l de diuron
  20 g/l d'équivalent bromoxynil sous forme de butyrate.

L'expérience de vieillissement effectuée de la même manière qu'à l'exemple 3 montre que le produit reste sous forme de liquide opaque blanc sans déphasage ni sédimentation.

EXEMPLE 12

On procéde comme à l'exemple précédent en dissolvant 6,95 parties en poids d'aminotriazole dans 30,55 parties en poids d'eau puis en ajoutant :
- 5,8 parties en poids du flow de l'exemple 1,
- 18,3 parties en poids de la dispersion de diuron décrite à l'exemple 4,
- 34,4 parties en poids de la dispersion d'atrazine décrite à l'exemple 3, et
- 4 parties en poids de la dispersion aqueuse à 4% d'épaississant décrite à l'exemple 4.

Les caractéristiques du produit obtenu sont les suivantes :
- aspect : liquide blanc opaque, homogène
- densité à 20°C : 1,107
- viscosité à 20°C : coupe AFNOR n°4 : 50 s
- teneur en matières actives : 75 g/l d'aminotriazole
  170 g/l d'atrazine
  85 g/l de diuron
  20 g/l d'équivalent bromoxynil sous forme de butyrate.

L'expérience de vieillissement effectuée de la manière indiquée à l'exemple 3 montre que le produit reste sous forme de liquide opaque blanc sans déphasage ni sédimentation.

EXEMPLE 13

On procède comme à l'exemple précédent en dissolvant 6,95 parties en poids d'aminotriazole dans 29,55 parties en poids d'eau puis on ajoute :
- 36,5 parties en poids de la dispersion de diuron décrite à l'exemple 4,
- 17,2 parties en poids de la dispersion d'atrazine décrite à l'exemple 3,
- 5,8 parties en poids du flow de l'exemple 1 et
- 4 parties en poids de la dispersion aqueuse à 4% d'épaississant décrite à l'exemple 4.

Les caractéristiques du produit ainsi obtenu sont les suivantes :
- aspect : liquide blanc opaque, homogène
- densité à 20°C : 1,108
- viscosité à 20°C : coupe AFNOR n°4 : 47 s
- teneur en matières actives : 75 g/l d'aminotriazole
  85 g/l d'atrazine
  170 g/l de diuron
  20 g/l d'équivalent bromoxynil sous forme de butyrate.

L'expérience de vieillissement effectuée de la manière indiquée à l'exemple 3 montre que le produit reste sous forme de liquide opaque blanc sans déphasage ni sédimentation, une très légère collerette pouvant être présente.

EXEMPLE 14

12,5 parties en poids du flow de butyrate de bromoxynil de l'exemple 1 sont mélangées avec
- 69,25 parties en poids d'une dispersion de simazine (titrant 44,8% de simazine et commercialisée par Ciba Geigy sous la marque GESATOPE autosuspensible,
- 15,25 parties en poids d'eau,
- 3 parties en poids de la dispersion aqueuse décrite à l'exemple 4.

Le produit résultant présente les caractéristiques suivantes :
- aspect : liquide blanc opaque, légèrement visqueux, homogène

9

EP 0 306 376 B1

- densité à 20°C : 1,128
- viscosité à 20°C : coupe AFNOR n°4 : 55 s ± 5 s
- teneur en matières actives : 45 g/l d'équivalent bromoxynil sous forme de butyrate
  350 g/l de simazine.

L'expérience de vieillissement effectuée de la manière indiquée à l'exemple 3 montre que le produit reste sous forme de liquide opaque blanc sans sédimentation mais avec éventuellement un très léger déphasage.

EXEMPLE 15

On procède comme à l'exemple 8 en mélangeant 6,6 parties en poids du flow de l'exemple 1 avec
- 37,65 parties en poids de la dispersion de diuron décrite à l'exemple 4,
- 35,35 parties en poids de la dispersion de simazine décrite à l'exemple 14,
- 17,4 parties en poids d'eau et
- 3 parties en poids de la dispersion aqueuse à 4% d'épaississant décrite à l'exemple 4.
  La composition ainsi obtenue présente les caractéristiques suivantes :
- aspect : liquide blanc opaque, légèrement visqueux, homogène
- densité à 20°C : 1,136
- viscosité à 20°C : coupe AFNOR n°4 : 53 s ± 5 s
- teneur en matières actives : 24 g/l d'équivalent bromoxynil sous forme de butyrate
  180 g/l de diuron
  180 g/l de simazine.

L'expérience de vieillissement effectuée de la manière indiquée à l'exemple 3 montre que le produit reste sous forme de liquide opaque blanc sans déphasage ni sédimentation.

EXEMPLE 16

On procède comme à l'exemple 8 en mélangeant 6,7 parties en poids du flow de l'exemple 1 avec
- 25,3 parties en poids de la dispersion de diuron décrite à l'exemple 4,
- 47,5 parties en poids de la dispersion de simazine décrite à l'exemple 14,
- 17,5 parties en poids d'eau et
- 3 parties en poids de la dispersion aqueuse à 4% d'épaississant décrite à l'exemple 4.
  La composition ainsi obtenue présente les caractéristiques suivantes :
- aspect : liquide blanc opaque, légèrement visqueux, homogène
- densité à 20°C : 1,127
- viscosité à 20°C : coupe AFNOR n°4 : 48 s ± 5 s
- teneur en matières actives : 24 g/l d'équivalent bromoxynil sous forme de butyrate
  120 g/l de diuron
  240 g/l de simazine.

L'expérience de vieillissement effectuée de la manière indiquée à l'exemple 3 montre que le produit reste sous forme de liquide opaque blanc sans déphasage ni sédimentation.

EXEMPLE 17

On procède comme à l'exemple 8 en mélangeant 6,6 parties en poids du flow de l'exemple 1 avec
- 50,1 parties en poids de la dispersion de diuron décrite à l'exemple 4,
- 23,5 parties en poids de la dispersion de simazine décrite à l'exemple 14,
- 16,8 parties en poids d'eau et
- 3 parties en poids de la dispersion aqueuse à 4% d'épaississant décrite à l'exemple 4.
  La composition ainsi obtenue présente les caractéristiques suivantes :
- aspect : liquide blanc opaque, légèrement visqueux, homogène
- densité à 20°C : 1,139
- viscosité à 20°C : coupe AFNOR n°4 : 49 s ± 5 s
- teneur en matières actives : 24 g/l d'équivalent bromoxynil sous forme de butyrate
  240 g/l de diuron
  120 g/l de simazine.

L'expérience de vieillissement effectuée de la manière indiquée à l'exemple 3 montre que le produit reste sous forme de liquide opaque blanc sans déphasage ni sédimentation.

EXEMPLE 18

On procède comme à l'exemple 10 en dissolvant 9,2 parties en poids d'aminotriazole à 98% de pureté dans 38,95 parties en poids d'eau puis on ajoute :
- 8,5 parties en poids du flow de l'exemple 1,
- 40,35 parties en poids de la dispersion de simazine décrite à l'exemple 14 et
- 3 parties en poids de la dispersion aqueuse à 4% d'épaississant décrite à l'exemple 4.
On désaère sous vide puis on filtre sur tamis de 200 microns.
La composition ainsi obtenue présente les caractéristiques suivantes :
- aspect : liquide blanc opaque, homogène
- densité à 20°C : 1,108
- viscosité à 20°C : coupe AFNOR n°4 : 32 s
- teneur en matières actives : 30 g/l d'équivalent bromoxynil sous forme de butyrate
  100 g/l d'aminotriazole
  200 g/l de simazine.
L'expérience de vieillissement effectuée de la manière indiquée à l'exemple 3 montre que le produit reste sous forme de liquide blanc opaque présentant une légère collerette.

EXEMPLE 19

On procède comme à l'exemple 11 en dissolvant 6,9 parties en poids d'aminotriazole à 98% de pureté dans 31,3 parties d'eau éventuellement tiédie, puis on ajoute :
- 5,8 parties en poids du flow de l'exemple 1,
- 26,8 parties en poids de la dispersion de diuron décrite à l'exemple 4,
- 25,2 parties en poids de la dispersion de simazine décrite à l'exemple 14, et
- 4 parties en poids de la dispersion aqueuse à 4% d'épaississant décrite à l'exemple 4.
A la fin de l'opération, les caractéristiques du produit ainsi obtenu sont les suivantes :
- aspect : liquide blanc opaque, homogène
- densité à 20°C : 1,109
- viscosité à 20°C : coupe AFNOR n°4 : 45 s
- teneur en matières actives : 75 g/l d'aminotriazole
  125 g/l de simazine
  125 g/l de diuron
  20 g/l d'équivalent bromoxynil sous forme de butyrate.
L'expérience de vieillissement effectuée de la manière indiquée à l'exemple 3 montre que le produit reste sous forme de liquide opaque blanc sans sédimentation mais avec éventuellement un très léger déphasage.

EXEMPLE 20

On procède comme à l'exemple 19 en dissolvant 6,95 parties en poids d'aminotriazole à 98% de pureté dans 30,6 parties d'eau éventuellement tiédie, puis on ajoute :
- 5,75 parties en poids du flow de l'exemple 1,
- 18,3 parties en poids de la dispersion de diuron décrite à l'exemple 4,
- 34,4 parties en poids de la dispersion de simazine décrite à l'exemple 14, et
- 4 parties en poids de la dispersion aqueuse à 4% d'épaississant décrite à l'exemple 4.
A la fin de l'opération, les caractéristiques du produit ainsi obtenu sont les suivantes :
- aspect : liquide blanc opaque, homogène
- densité à 20°C : 1,105
- viscosité à 20°C : coupe AFNOR n°4 : 46 s
- teneur en matières actives : 75 g/l d'aminotriazole
  170 g/l de simazine
  85 g/l de diuron
  20 g/l d'équivalent bromoxynil sous forme de butyrate.
L'expérience de vieillissement effectuée de la manière indiquée à l'exemple 3 montre que le produit reste sous forme de liquide opaque blanc sans sédimentation mais avec éventuellement un très léger déphasage.

EXEMPLE 21

On procède comme à l'exemple 19 en dissolvant 6,90 parties en poids d'aminotriazole à 98% de pureté dans 29,95 parties d'eau éventuellement tiédie, puis on ajoute:
- 5,7 parties en poids du flow de l'exemple 1,
- 36,35 parties en poids de la dispersion de diuron décrite à l'exemple 4,
- 17,1 parties en poids de la dispersion de simazine décrite à l'exemple 14, et
- 4 parties en poids de la dispersion aqueuse à 4% d'épaississant décrite à l'exemple 4.
A la fin de l'opération, les caractéristiques du produit ainsi obtenu sont les suivantes :
- aspect : liquide blanc opaque, homogène
- densité à 20°C : 1,111
- viscosité à 20°C : coupe AFNOR n°4 : 46 s
- teneur en matières actives : 75 g/l d'aminotriazole
85 g/l de simazine
170 g/l de diuron
20 g/l d'équivalent bromoxynil sous forme de butyrate.
L'expérience de vieillissement effectuée de la manière indiquée à l'exemple 3 montre que le produit reste sous forme de liquide opaque blanc sans sédimentation mais avec éventuellement un très léger déphasage.

EXEMPLE 22

On mélange 21,8 parties en poids du produit de l'exemple 2 avec 78,2 parties en poids d'une dispersion aqueuse stable de chlortoluron titrant 43,7% en poids de matière active commercialisée par la Société Ciba Geigy sous la marque DICURAN autosuspensible.
Le mélange est, si nécessaire, désaéré sous vide et présente les caractéristiques suivantes :
- aspect : liquide blanc opaque, homogène
- densité à 20°C : 1,169
- viscosité à 20°C : coupe AFNOR n°4 : 33 s
- teneur en matières actives : 80 g/l d'équivalent ioxynil sous forme de butyrate
400 g/l de chlortoluron.
L'expérience de vieillissement effectuée de la manière indiquée à l'exemple 3 montre que le produit reste sous forme de liquide opaque blanc sans sédimentation mais avec éventuellement un très léger déphasage.

EXEMPLE 23

On mélange 22,6 parties en poids du produit de l'exemple 2 avec
- 77,1 parties en poids d'une dispersion aqueuse d'isoproturon titrant 45,9% en poids de matière active et commercialisée par la Société Ciba Geigy sous la marque OFAL 500 autosuspensible, et
- 0,3 partie en poids d'eau.
Le mélange est, si nécessaire, désaéré sous vide et présente les caractéristiques suivantes :
- aspect : liquide opaque beige clair, homogène
- densité à 20°C : 1,130
- viscosité à 20°C : coupe AFNOR n°4 : 33 s
- teneur en matières actives : 80 g/l d'équivalent ioxynil sous forme de butyrate
400 g/l d'isoproturon.
L'expérience de vieillissement effectuée de la manière indiquée à l'exemple 3 montre que le produit reste sous forme de liquide opaque blanc sans sédimentation mais avec éventuellement un très léger déphasage.

EXEMPLE 24

On mélange 45,4 parties en poids du produit de l'exemple 1 avec
- 46,3 parties en poids du produit de l'exemple 2,
- 7,3 parties en poids d'eau et
- 1 partie en poids d'une dispersion aqueuse contenant 4% d'un produit épaississant décrit à l'exemple 4.

EP 0 306 376 B1

Le mélange est, si nécessaire, désaéré sous vide et présente les caractéristiques suivantes :
- aspect : liquide opaque brun clair
- densité à 20°C : 1,238
- viscosité à 20°C : coupe AFNOR n°4 : 42 s
- teneur en matières actives : 180 g/l d'équivalent d'ioxynil sous forme de butyrate
  180 g/l d'équivalent bromoxynil sous forme de butyrate.

L'expérience de vieillissement effectuée de la manière indiquée à l'exemple 3 montre que le produit reste sous forme de liquide opaque blanc sans sédimentation mais avec éventuellement un très léger déphasage.

EXEMPLE 25

On mélange 49,8 parties en poids du produit de l'exemple 1 avec
- 43,1 parties en poids d'une dispersion aqueuse de bromoxynil sous forme phénolique titrant 36,9% en poids de bromoxynil et fabriquée par la Demanderesse sous la marque SABRE,
- 6,1 parties en poids d'eau et
- 1 partie en poids de la dispersion aqueuse contenant 4% d'un produit épaississant décrit à l'exemple 4.

Le mélange est, si nécessaire, désaéré sous vide et présente les caractéristiques suivantes :
- aspect : liquide blanc opaque, homogène
- densité à 20°C : 1,257
- viscosité à 20°C : coupe AFNOR n°4 : 45 s
- teneur en matières actives : 400 g/l d'équivalent bromoxynil dont 200 sous forme de butyrate.

Cet exemple montre qu'il est possible de présenter la même matière sous plusieurs formes associées et dans des proportions quelconques.

L'expérience de vieillissement effectuée de la manière indiquée à l'exemple 3 montre que le produit reste sous forme de liquide opaque blanc sans sédimentation mais avec éventuellement un très léger déphasage.

EXEMPLE 26

Flow contenant 150 g/l de bromoxynil sous forme de butyrate et 100 g/l de dicamba sous forme de sel de diéthanolamine soluble en milieu aqueux.

On mélange 41 parties en poids du flow de l'exemple 1 et 3,6 parties en poids d'une dispersion aqueuse contenant 4% de RHODOPOL 23® décrite à l'exemple 4 avec une solution aqueuse contenant :
- 39,4 parties en poids d'eau,
- 0,9 parties en poids d'éthylèneglycol,
- 5,2 parties en poids de diéthanolamine et
- 9,9 parties en poids de dicamba technique (teneur 88%).

Le mélange obtenu est désaéré sous vide et présente les caractéristiques suivantes:
- aspect : liquide opaque beige, homogène
- densité à 20°C : 1,155
- viscosité à 20°C : coupe AFNOR n°4 : 40 s ± 5 s
- teneur en matières sèches (105°C, 1 heure): 28% en poids
- suspensivité selon la méthode CIPAC MT 15.1 avec de l'eau standard CIPAC, référence D, à 20°C, prise d'essai 35,7 g après 1 heure: ≧ 90%
- tenue au froid : dispersion coulable sans cristaux à -5°C
- teneurs en matières actives: 150 g/l d'équivalent bromoxynil sous forme de butyrate et
  100 g/l de dicamba sous forme de sel de diéthanolamine.

L'expérience de vieillissement à 54°C montre que le produit reste sous forme de liquide opaque beige, sans déphasage ni sédimentation.

EXEMPLE 27

Flow contenant 100 g/l de bromoxynil sous forme de butyrate et 480 g/l de métolachlore.
On mélange 28,25 parties en poids du flow de l'exemple 1 avec une dispersion aqueuse contenant :
- 45,15 parties en poids de métolachlore technique à 96%
- 24,6 parties en poids d'eau et

13

EP 0 306 376 B1

- 2 parties en poids de la dispersion aqueuse à 4% de RHODOPOL 23® décrite à l'exemple 4.

Le mélange obtenu est désaéré sous vide et présente les caractéristiques suivantes:
- aspect : liquide opaque beige, homogène
- densité à 20°C : 1,106
- viscosité à 20°C : coupe AFNOR n°4 : 45 s ± 5 s
- teneur en matières sèches (105°C, 1 heure): 59% en poids
- suspensivité selon la méthode CIPAC MT 15.1 avec de l'eau standard CIPAC, référence D, à 20°C, prise d'essai 19 g après 1 heure: ≧ 85%
- tenue au froid : dispersion coulable sans cristaux à 0°C
- teneurs en matières actives: 100 g/l d'équivalent bromoxynil sous forme de butyrate et 480 g/l de métolachlore.

L'expérience de vieillissement à 54°C montre que le produit reste sous forme de liquide opaque beige, sans déphasage ni sédimentation.

## EXEMPLE 28

Flow contenant 283 g/l de métolachlore, 145 g/l d'atrazine et 57 g/l de bromoxynil sous forme de butyrate.

On mélange 16,25 parties en poids du flow de l'exemple 1 avec 83,75 parties en poids d'un flow contenant 15,84% d'atrazine et 30,75% de métolachlore et commercialisée par Ciba Geigy sous la marque PRIMEXTRA AUTOSUSPENSIBLE.

Le mélange obtenu est désaéré sous vide, filtré et présente les caractéristiques suivantes:
- aspect : liquide opaque beige, homogène
- densité à 20°C : 1,097
- viscosité à 20°C : coupe AFNOR n°4 : 45 s ± 5 s
- teneur en matières sèches (105°C, 1 heure): 49% en poids
- suspensivité selon la méthode CIPAC MT 15.1 avec de l'eau standard CIPAC, référence D, à 20°C, prise d'essai 23 g après 1 heure: ≧ 90%
- tenue au froid : dispersion coulable sans cristaux à -5°C
- teneurs en matières actives: 283 g/l de métolachlore, 145 g/l d'atrazine et 57 g/l d'équivalent bromoxynil sous forme de butyrate.

L'expérience de vieillissement à 54°C montre que le produit reste sous forme de liquide opaque blanc, sans déphasage ni sédimentation.

## EXEMPLE 29

Flow contenant 200 g/l de bromoxynil sous forme de butyrate et 62,5 g/l d'isoxaben.

On mélange 54,5 parties en poids du flow de l'exemple 1 avec 45,5 parties en poids d'un flow titrant 12% d'isoxaben et commercialisée par Lilly France sous la marque CENT 7.

Après désaération éventuelle et filtration, le produit obtenu présente les caractéristiques suivantes:
- aspect : liquide opaque beige clair, homogène
- densité à 20°C : 1,149
- viscosité à 20°C : coupe AFNOR n°4 : 60 s ± 10 s
- teneur en matières sèches (105°C, 1 heure): 30% en poids
- suspensivité selon la méthode CIPAC MT 15.1 avec de l'eau standard CIPAC, référence D, à 20°C, prise d'essai 33,3 g après 1 heure: ≧ 90%
- tenue au froid : dispersion coulable sans cristaux à -10°C
- teneurs en matières actives: 200 g/l d'équivalent bromoxynil sous forme de butyrate et 62,5 g/l d'isoxaben.

L'expérience de vieillissement à 54°C montre que le produit reste sous forme de liquide opaque beige, sans déphasage ni sédimentation.

## EXEMPLE 30

Flow contenant 200 g/l d'ioxynil sous forme de butyrate et 62,5 g/l d'isoxaben.

On mélange 55,05 parties en poids du flow de l'exemple 2 avec 44,95 parties en poids du flow d'isoxaben décrite dans l'exemple 29.

Après désaération sous vide et filtration, le produit obtenu présente les caractéristiques suivantes:

14

- aspect : liquide opaque beige clair, homogène
- densité à 20°C : 1,171
- viscosité à 20°C : coupe AFNOR n°4 : 60 s ± 10 s
- teneur en matières sèches (105°C, 1 heure): 30% en poids
- suspensivité selon la méthode CIPAC MT 15.1 avec de l'eau standard CIPAC, référence D, à 20°C, prise d'essai 35.7 g après 1 heure: ≧ 85%
- tenue au froid : dispersion coulable sans cristaux à -10°C
- teneurs en matières actives: 200 g/l d'équivalent ioxynil sous forme de butyrate et 62,5 g/l d'isoxaben.

L'expérience de vieillissement à 54°C montre que le produit reste sous forme de liquide opaque beige, sans déphasage ni sédimentation.

EXEMPLE 31

Flow contenant 400 g/l d'ioxynil sous forme d'acétate.

35,5 parties en poids d'acétate d'ioxynil technique (point de fusion 204°C, teneur en équivalent ioxynil de 88%) sont incorporés dans un mélange constitué de :
- 49,8 parties en poids d'eau,
- 5 parties en poids d'éthylèneglycol,
- 1 partie en poids de nonylphénol (polyéthoxylé en moyenne avec 10 moles d'oxyde d'éthylène)
- 3,6 parties en poids d'un mélange d'alcoylsulfonate et d'huile végétale polyéthoxylée commercialisé par la Société Demanderesse sous la marque GALORYL DM 562® et
- 0.1 partie en poids d'une émulsion à 30% de diméthylpolysiloxane tel que le RHODORSIL 426® commercialisé par Rhône-Poulenc.

La dispersion ainsi obtenue est broyée dans un broyeur à billes de façon à obtenir une granulométrie essentiellement inférieure à 10 microns.

On ajoute ensuite 5 parties en poids d'une dispersion aqueuse contenant 4% de RHODOPOL 23®.

La dispersion blanchâtre qui en résulte est désaérée sous vide et filtrée sur tamis de 200 microns.

Le flow ainsi obtenu présente les caractéristiques suivantes:
- aspect : liquide légèrement visqueux, opaque blanc, homogène, sans déphasage ni sédimentation,
- densité à 20°C : 1.28 ± 0,01
- viscosité à 20°C : coupe AFNOR n°4 : 50 s ± 5 s
- teneur en matières sèches (105°C, 1 heure): (36 ± 1)%
- suspensivité selon la méthode CIPAC MT 15.1 avec de l'eau standard CIPAC, référence D, à 20°C, prise d'essai 27,6 g après 1/2 heure: ≧ 90%
- tenue au froid : dispersion coulable sans cristaux à -5°C
- teneurs en matières actives: 400 g/l d'ioxynil sous forme acétate.

L'expérience de vieillissement à 54°C montre que le produit reste sous forme de liquide opaque blanc, homogène, sans déphasage ni sédimentation.

EXEMPLE 32

Flow contenant 400 g/l de bromoxynil sous forme acétate.

38 parties en poids d'acétate de bromoxynil technique (point de fusion 154°C, teneur en équivalent bromoxynil de 85%) sont mélangés avec :
- 47,3 parties en poids d'eau,
- 5 parties en poids d'éthylèneglycol,
- 1 partie en poids de nonylphénol (polyéthoxylé en moyenne avec 10 moles d'oxyde d'éthylène)
- 3,6 parties en poids de Galoryl DM 562® commercialisé par la Société Demanderesse et
- 0.1 partie en poids d'une émulsion à 30% de diméthylpolysiloxane tel que le RHODORSIL 426® commercialisé par Rhône-Poulenc.

La dispersion ainsi obtenue est broyée dans un broyeur à billes de façon à obtenir une granulométrie essentiellement inférieure à 10 microns.

On ajoute ensuite 5 parties en poids d'une dispersion aqueuse contenant 4% de RHODOPOL 23®.

La dispersion blanchâtre qui en résulte est désaérée sous vide et filtrée sur tamis de 200 microns.

Le flow ainsi obtenu présente les caractéristiques suivantes:
- aspect : liquide légèrement visqueux, opaque blanc, homogène, sans déphasage ni sédimentation,
- densité à 20°C : 1,24 ± 0,01

15

- viscosité à 20°C : coupe AFNOR n°4 : 50 s ± 5 s
- teneur en matières sèches (105°C, 1 heure): (38 ± 1)%
- suspensivité selon la méthode CIPAC MT 15.1 avec de l'eau standard CIPAC, référence D, à 20°C, prise d'essai 26,3 g après 1 heure: ≧ 80%
- tenue au froid : dispersion coulable sans cristaux à -5°C
- teneurs en matières actives: 400 g/l de bromoxynil sous forme acétate.

L'expérience de vieillissement à 54°C montre que le produit reste sous forme de liquide opaque blanc, homogène, sans déphasage ni sédimentation.

EXEMPLE 33

Flow contenant 200 g/l de bromoxynil sous forme de butyrate et 66,7 g/l de clopyralide sous forme de sel de sodium soluble en milieu aqueux.

On mélange 17,6 parties en poids d'une solution aqueuse à 400 g/l de sel de sodium du clopyralide (32,6% d'équivalent m.a.) avec un mélange constitué de :
- 53,75 parties en poids du flow de l'exemple 1,
- 4 parties en poids d'une dispersion à 4% de RHODOPOL 23®
- 1 partie en poids d'éthylèneglycol et
- 23,65 parties en poids d'eau.

Après homogénéisation et désaération sous vide, le produit présente les caractéristiques suivantes:
- aspect : liquide opaque beige, homogène, sans déphasage ni sédimentation
- densité à 20°C : 1,165
- viscosité à 20°C : coupe AFNOR n°4 : 46 s
- teneur en matières sèches (105°C, 1 heure): (30±1) %
- suspensivité selon la méthode CIPAC MT 15.1 avec de l'eau standard CIPAC, référence D, à 20°C, prise d'essai 43.5 g après 1 heure: ≧ 90%
- tenue au froid : dispersion coulable sans cristaux à -5°C
- teneurs en matières actives: 200 g/l d'équivalent bromoxynil sous forme de butyrate et 66,7 g/l de clopyralide sous forme de son sel de sodium.

L'expérience de vieillissement à 54°C montre que le produit reste sous forme de liquide opaque beige, sans déphasage ni sédimentation.

EXEMPLE 34

Flow contenant 200 g/l d'ioxynil sous forme de butyrate et 66,7 g/l de clopyralide sous forme de sel de sodium soluble en milieu aqueux.

On mélange 17,3 parties en poids d'une solution aqueuse à 400 g/l de sel de sodium du clopyralide (32,6% d'équivalent m.a.) avec un mélange constitué de :
- 54,4 parties en poids du flow de l'exemple 2,
- 4 parties en poids d'une dispersion à 4% de RHODOPOL 23®
- 1,3 partie en poids d'éthylèneglycol et
- 23 parties en poids d'eau.

Après homogénéisation et désaération sous vide, le produit présente les caractéristiques suivantes:
- aspect : liquide opaque beige, homogène, sans déphasage ni sédimentation
- densité à 20°C : 1,191
- viscosité à 20°C : coupe AFNOR n°4 : 35 s
- teneur en matières sèches (105°C, 1 heure): (30±1) %
- suspensivité selon la méthode CIPAC MT 15.1 avec de l'eau standard CIPAC, référence D, à 20°C, prise d'essai 44,2 g après 1 heure: ≧ 90%
- tenue au froid : dispersion coulable sans cristaux à -5°C
- teneurs en matières actives: 200 g/l d'équivalent ioxynil sous forme de butyrate et 66,7 g/l de clopyralide sous forme de son sel de sodium.

L'expérience de vieillissement à 54°C montre que le produit reste sous forme de liquide opaque beige, sans déphasage ni sédimentation.

Les compositions herbicides conformes à l'invention ont été mises en oeuvre sur des cultures de maïs, sur les céréales à paille, sur les graminées prairiales, sur les cultures légumières, sur les légumineuses, sur les vignes et vergers et en tant que désherbants totaux.

La sélectivité remarquable des compositions herbicides conformes à l'invention apparaît lors de leur application dans le cadre du procédé conforme à l'invention.

Les applications sont réalisées par pulvérisation de bouillies, en quantités pouvant varier de 20 l à 1000 l de bouillie/ha et, plus particulièrement,

- de 20 à 80 l de bouillie/ha dans le cas des applications terrestres dites à "bas volume" ou dans le cas des applications aériennes,
- de 150 à 500 l de bouillie/ha dans le cas des applications terrestres classiques.

On rappelle que le terme "bouillie" désigne le résultat du mélange d'une dose donnée de formulation avec une quantité définie d'eau, ladite dose donnée correspondant à la quantité globale de matière active par hectare, quantité qui reste constante quel que soit le mode d'application choisi.

Ainsi, si par exemple il y a lieu d'utiliser une quantité de 1 litre de produit commercial par hectare, c'est-à-dire par exemple de dispersion stable ou flow selon l'exemple 1, on aura, dans le cas d'une application terrestre classique, à pulvériser 500 l de bouillie composée de 1 l de produit commercial et de 499 l d'eau et, dans le cas d'une application aérienne, on pulvérisera 20 l de bouillie composée de 1 l de produit commercial et de 19 l d'eau.

L'application se fait après le semis de culture ou après la levée de celle-ci.

Ces applications ont pour but :

- dans le cas des formulations du type flow à base d'oxynils seuls, de détruire une certaine flore présente et d'en prévenir à court terme les nouvelles levées,
- dans le cas des formulations du type flow à base d'un ou plusieurs oxynils accompagnées d'autres matières actives sous forme de flow ou de formulation compatible, d'améliorer le spectre herbicide des oxynils sous forme de flow employés seuls pour la destruction de la flore présente et/ou d'améliorer l'efficacité initiale de chaque matière active prise séparément et/ou de fournir une efficacité à long terme lorsque ces matières actives annexes ont une action résiduelle pendant une durée d'action de un à plusieurs mois.

Pour les applications sur cultures de maïs, on peut utiliser, par exemple, les formulations des exemples 1, 25 et 3.

La formulation de l'exemple 1 présente une meilleure sélectivité par rapport à la formulation de référence constituée par un concentré émulsionnable ou C.E. à base d'octanoate de bromoxynil ou de butyrate de bromoxynil.

La formulation de l'exemple 25 permet de cumuler l'effet immédiat de l'ester avec l'effet un peu plus lent du bromoxynil phénol et de diminuer la dose utile en matière active/ha grâce à la dose utile plus faible de l'ester.

La formulation de l'exemple 3 permet de cumuler l'effet immédiat du butyrate de bromoxynil avec l'effet foliaire à court terme et l'effet racinaire à long terme de l'atrazine.

Les formulations selon ces trois exemples peuvent également être appliquées à la culture du sorgho, celle-ci ayant de nombreuses similitudes avec la culture de maïs.

Suivant la nature de la flore adventice, l'atrazine pourrait être remplacée par de la simazine dans les mêmes conditions.

Pour les applications sur cultures de céréales à paille, il est déjà connu d'utiliser :

- des esters d'oxynils (ioxynil et/ou bromoxynil) sous forme de concentrés émulsionnables, seuls ou en association avec des phénoxy-acides.
- des sels alcalins ou d'amine d'oxynils seuls et/ou principalement associés à des urées substituées sélectives telles qu'isoproturon, chlortoluron, etc.

De ce fait, les formulations selon l'invention à base de flows d'esters d'ioxynil et/ou de bromoxynil seuls et/ou associés à des flows d'urées substituées sont intéressantes grâce à l'effet immédiat et complémentaire des oxynils sur certaines plantes.

Ainsi,

- la formulation de l'exemple 2 (ioxynil sous forme butyrate) peut compléter utilement l'effet d'autres matières actives du fait de son action rapide et d'un spectre d'efficacité différent, l'ensemble étant utilisé en tant que mélange extemporané ("tank-mix").
- la formulation de l'exemple 24 (ioxynil + bromoxynil sous forme de butyrate) présente l'avantage de cumuler les spectres herbicides du ioxynil et du bromoxynil, cette formulation pouvant se substituer aux concentrés émulsionnables connus à base d'octanoates et d'octanoates-butyrates mis en oeuvre seuls ou sous forme de mélange extemporané avec d'autres formulations,
- la formulation de l'exemple 25 (butyrate de bromoxynil + bromoxynil phénol sous forme de flow) permet de cumuler l'effet immédiat de l'ester avec l'effet un peu plus lent du phénol et éventuellement de diminuer la dose de matière active mise en oeuvre par rapport à celle qu'il est nécessaire d'appliquer lorsque l'oxynil est appliqué seulement sous forme phénol.

Des formulations identiques peuvent être réalisées avec l'ioxynil ou l'association ioxynil + bromoxynil (ester et phénol).

On peut également utiliser les formulations des exemples 22 et 23.

Par rapport aux formulations esters d'oxynil en concentré émulsionnable utilisées en mélange extemporané avec de l'isoproturon ou du chlortoluron, ces compositions conformes à l'invention (notamment exemples 22 et 23) permettent de réaliser une formulation prête à l'emploi utilisée dans les mêmes conditions et conduisant aux mêmes effets.

Dans le cas des cultures légumiéres, à savoir principalement les cultures de liliacées ou d'espèces voisines telles que les oignons, les ails, les échalotes et autres, il est déjà connu d'employer des concentrés émulsionnables d'octanoate d'ioxynil.

Par rapport à ces produits, les formulations conformes à l'invention et, en particulier, la formulation de l'exemple 2, permettent la diminution de la phytotoxicité.

Pour les applications en vignes et vergers ou en désherbage total, les esters d'oxynil en formulation flow peuvent être avantageusement utilisés en association avec de nombreuses matières actives à action complémentaire, soit avec l'aminotriazole en solution aqueuse pour avoir une action sur graminées, soit avec des urées substituées et/ou des triazines pour avoir un effet durable dans le temps.

Pour les applications aux graminées prairiales et pour les applications sur légumineuses (pois et soja, par exemple), les esters d'oxynil en suspension aqueuse concentrée pourraient remplacer avantageusement les esters d'oxynil en concentré émulsionnable lorsque ceux-ci, pour des raisons diverses, soit variétales, soit climatiques, se montrent insuffisamment sélectifs.

Dans les divers exemples d'application qui précèdent, le rapport de chaque matière active peut être modifié de façon à réaliser des formulations adaptées à chaque créneau d'utilisation en fonction de la nature et de l'âge de la flore présente, de la nature du sol, des plantes cultivées ou environnantes et des conditions climatiques locales.

On peut distinguer, dans le cas des compositions selon l'invention, entre quatre groupes.

Un premier groupe est constitué par les formulations binaires comprenant un flow d'ester d'oxynil et un herbicide à action résiduelle également sous forme de flow.

A cet égard, on peut citer
- la formulation de l'exemple 5 (butyrate de bromoxynil + atrazine) destinée à améliorer les performances immédiates de l'atrazine sur une flore adventice où les dicotylédones telles qu'Amaranthus, Chenopodium et Polygonum sont présentes et dominantes.
- la formulation de l'exemple 4 (butyrate de bromoxynil + diuron) particulièrement destinée aux cultures où l'on est en présence de dicotylédones résistantes aux triazines et où l'emploi du diuron est recommandé et
- la formulation de l'exemple 14 (butyrate de bromoxynil + simazine) qui remplace la formulation de l'exemple 5 pour les sols et variétés où l'atrazine peut s'avérer phytotoxique pour les cultures présentes.

Un deuxième groupe est constitué par des formulations ternaires comprenant un flow d'ester d'oxynil associé à deux herbicides à action résiduelle.

A cet égard, on peut citer
- les formulations des exemples 6, 7 et 8 (butyrate de bromoxynil + atrazine + diuron), qui diffèrent entre elles par les rapports respectifs des différentes matières actives et qui peuvent présenter un intérêt dans le ou les cas où l'association atrazine + diuron apporte un effet à long terme plus complet que chaque matière active prise séparément, l'ester d'oxynil apportant une destruction rapide des dicotylédones présentes et
- les formulations des exemples 15, 16 et 17 (butyrate de bromoxynil + diuron + simazine) qui sont à réserver pour les cas où, suivant la nature des sols, des variétés, des cultures ou des plantes environnantes, les effets résiduels phytotoxiques de l'atrazine sont à craindre.

Un troisième groupe est constitué par les formulations ternaires à base d'ester d'oxynil sous forme de flow associé à un herbicide à action résiduelle et à l'aminotriazole en solution aqueuse.

Concernant ce groupe, on peut citer
- la formulation de l'exemple 9 (butyrate de bromoxynil + diuron + aminotriazole),
- la formulation de l'exemple 10 (butyrate de bromoxynil + atrazine + aminotriazole) et
- la formulation de l'exemple 18 (butyrate de bromoxynil + simazine + aminotriazole).

L'aminotriazole, matière active soluble, est très employé en vignes, vergers et en désherbage total ; son apport permet d'avoir une action complémentaire et assez rapide principalement sur graminées mais aussi sur dicotylédones dont celles résistantes aux triazines.

Les doses d'utilisation sont très variables en fonction des différents types d'utilisation.

18

Un quatrième groupe est constitué par les formulations quaternaires à base d'un ester d'oxynil sous forme de flow associé à deux herbicides à action résiduelle et à l'aminotriazole en solution aqueuse.

On peut citer à cet égard les formulations des exemples 11, 12 et 13 (butyrate de bromoxynil + atrazine + diuron + aminotriazole) et celles des exemples 19, 20 et 21 (butyrate de bromoxynil + simazine + diuron + aminotriazole).

Les possibilités d'utilisation sont les mêmes que précédemment.

La diversité de ces exemples non limitatifs montre la possibilité d'avoir recours aux esters d'oxynil sous forme de flow pour la réalisation de diverses compositions adaptées à chaque type d'application.

Les compositions herbicides conformes à l'invention ont fait l'objet d'essais en serre et en plein champ.

On a examiné l'efficacité et la sélectivité de ces compositions et formulations et on a comparé les résultats à ceux obtenus avec les formulations classiques, à savoir les suspensions concentrées aqueuses d'oxynil sous forme phénol et les concentrés émulsionnables sous forme ester; les formulations mises en oeuvre répondaient à ce qu'on désigne dans le métier par l'expression "normes de produits loyaux et marchands"; leur mise en oeuvre était satisfaisante (bonne suspension, bonne émulsion lors de la dilution) et leur conservation bonne à la température ambiante.

L'étude a porté, d'une part, sur le bromoxynil et, d'autre part, sur l'ioxynil, chaque matière active ayant des usages différents suivant l'époque d'utilisation (automne, hiver ou printemps), la nature des cultures et les propriétés propres d'efficacité et de phytotoxicité.

On a expérimenté, à titre d'exemple, les formulations suivantes:

- en ce qui concerne le bromoxynil :

    . deux formulations du commerce dont la première est à base d'octanoate de bromoxynil en concentré émulsionnable (ou EC, référencée $R_1$) et dont la deuxième est à base de bromoxynil-phénol en suspension concentrée aqueuse (ou SCA, référencée $R_2$), ces formulations étant utilisées sur le maïs, le sorgho, sur les céréales à petites graines (éventuellement le riz), sur les plantes de la famille des papilionacées (légumineuses) telles que par exemple la luzerne, et sur les plantes de la famille des liliacées ou apparentées telles que l'ail, l'oignon et l'échalote,

    . une formulation du type concentré émulsionnable à base de butyrate (référencée $R_3$) et

    . une formulation à base de butyrate selon l'invention ($R_4$);

- en ce qui concerne l'ioxynil :

    . une formulation à base d'octanoate en concentré émulsionnable référencée $R'_1$ (du type de celles qui sont couramment utilisées dans l'art antérieur),

    . une formulation d'ioxynil sous forme phénol en suspension concentrée aqueuse, référencée $R'_2$ (pour mémoire, car elle n'est pas utilisée dans la pratique, son niveau d'efficacité étant trop bas) dans certains essais,

    . deux formulations à base de butyrate dont l'une est sous forme de concentré émulsionnable et l'autre sous forme de flow aqueux conforme à l'invention, ces deux formulations étant référencées respectivement $R'_3$ et $R'_4$.

Les formulations à base d'ioxynil sont utilisées sur les mêmes cultures que celles indiquées pour les formulations à base de bromoxynil; des nuances assez importantes existent au niveau des usages, pays par pays, en fonction de la tolérance des plantes cultivées en question à ces herbicides en fonction des conditions locales propres à chaque technique de culture.

Ci-après, les doses de matières actives (m.a.) sont exprimées en "équivalent oxynil phénol" (équivalent phénol) aussi bien pour la teneur des formulations que pour les doses appliquées à l'hectare.

Dans ce qui suit, on a étudié successivement l'efficacité et la sélectivité des flow aqueux d'esters de bromoxynil et d'ioxynil selon l'invention en comparaison avec celles des produits de l'art antérieur.

I. ETUDE DES PRODUITS A BASE DE BROMOXYNIL

A. Essais en serre

Exemple 1

On a examiné la phytotoxicité sur maïs (1er niveau de dose) avec traitement au stade 5 feuilles.
L'essai comprend deux répétitions de 4 plants de maïs chacune, disposés au hasard dans la serre.

L'application en pulvérisation classique à 0,2 MPa de pression a été réalisée à raison de 500 l de bouillie à l'hectare.

Les produits de référence $R_1$, $R_2$ et $R_3$ contiennent respectivement 240 g/l de bromoxynil sous forme d'octanoate en concentré émulsionnable, 250 g/l de bromoxynil sous forme de phénol en suspension aqueuse concentrée et 120 g/l de bromoxynil sous forme de butyrate en concentré émulsionnable.

La composition conforme à l'invention de référence $R_4$ était à base de la formulation flow selon l'exemple 1 et contenait 400 g/l de bromoxynil sous forme de butyrate en suspension aqueuse concentrée.

Les doses appliquées et les résultats enregistrés 10 jours après le traitement sont réunis dans le tableau IV.

TABLEAU IV

| | Nature du produit étudié | Dose m.a. en g/ha | Phytotoxicité (en %) |
|---|---|---|---|
| $R_1$ | octanoate 240 g/l e.p. EC | 100 200 400 | 10 10 22,5 |
| $R_2$ | phénol 250 g/l e.p. SCA | 100 200 400 | 0 0 2,5 |
| $R_3$ | butyrate 120 g/l e.p. EC | 100 200 400 | 0 30 77 |
| $R_4$ | butyrate 400 g/l e.p. SCA | 100 200 400 | 5 5 10 |
| | témoin | | 0 |

Echelle de phytotoxicité :

| | |
|---|---|
| 0 | (témoin) pas d'effet |
| 5 | acceptable |
| 15 | limite de l'acceptabilité |
| 30 | inacceptable |
| 100 | destruction complète. |

Il résulte des valeurs réunies dans le tableau IV que la formulation $R_4$ selon l'invention est plus sélective que les concentrés émulsionnables de l'art antérieur.

Exemple 2

Appréciation de la phytotoxicité sur maïs (2e niveau de dose); il s'agit des résultats enregistrés 10 jours après traitement.

EP 0 306 376 B1

TABLEAU V

|  | | Nature du produit étudié | Dose m.a. en g/ha | Phytotoxicité (en %) |
|---|---|---|---|---|
| $R_1$ | | octanoate 240 g/l e.p. EC | 300 600 1200 | 22,5 40 90 |
| $R_3$ | | butyrate 120 g/l e.p. EC | 300 600 1200 | 40 77,5 100 |
| $R_4$ | | butyrate 400 g/l e.p. SCA | 300 600 1200 | 0 10 30 |
| | | témoin | | 0 |

Les valeurs réunies dans ce tableau V montrent qu'à dose égale/ha d'équivalent bromoxynil, la sélectivité de $R_4$ selon l'invention est très nettement supérieure.

Exemple 3

On a déterminé la phytotoxicité des mêmes produits successivement 5 jours*, puis 10 jours** après le traitement de cultures de blé (au stade 3 feuilles ou 3 F), d'orge (stade 3 feuilles), de carotte (stade 3 feuilles), de pois (stade 3 feuilles), de lin (stade 10 cm), de soja (stade 5 feuilles ou 5 F) et de haricot (stade 1 feuille ou 1 F) et on a réuni les résultats dans le tableau VI.

21

## TABLEAU VI

| Cultures Stades — Nature du produit étudié | Dose/ha g m.a. | Nombre de jours après traitement | Blé 3 F | Orge 3 F | Carotte 3 F | Pois 3 F | Lin 10 cm | Soja 5 F | Haricot 1 F |
|---|---|---|---|---|---|---|---|---|---|
| $R_1$ octanoate 240 g/l e.p. EC | 100 | 5 | 30 * /** | 22,5 / | 15 / | 30 / | 5 / | 0 / | 85 / |
|  |  | 10 | 5 | 5 | 70 | 32 | 2,5 | 0 | 85 |
|  | 200 | 5 | 30 / | 22,5 / | 70 / | 30 / | 50 / | 5 / | 95 / |
|  |  | 10 | 5 | 5 | 90 | 30 | 72 | 0 | 95 |
| $R_2$ phénol 250 g/l e.p. SCA | 100 | 5 | 0 / | 0 / | 22,5 / | 0 / | 40 / | 0 / | 15 / |
|  |  | 10 | 5 | 5 | 70 | 5 | 85 | 0 | 50 |
|  | 200 | 5 | 0 / | 0 / | 60 / | 0 / | 50 / | 5 / | 30 / |
|  |  | 10 | 5 | 5 | 85 | 5 | 90 | 0 | 60 |
| $R_3$ butyrate 120 g/l e.p. EC | 100 | 5 | 2,5 / | 2,5 / | 16 / | 0 / | 5 / | 0 / | 15 / |
|  |  | 10 | 5 | 5 | 50 | 5 | 5 | 0 | 10 |
|  | 200 | 5 | 2,5 / | 2,5 / | 50 / | 0 / | 22 / | 30 / | 30 / |
|  |  | 10 | 5 | 5 | 75 | 10 | 22 | 0 | 30 |
| $R_4$ butyrate 400 g/l e.p. SCA | 100 | 5 | 0 / | 0 / | 2,5 / | 0 / | 10 / | 0 / | 2,5 / |
|  |  | 10 | 5 | 5 | 3,5 | 3,5 | 30 | 0 | 0 |
|  | 200 | 5 | 0 / | 0 / | 15 / | 0 / | 10 / | 0 / | 2,5 / |
|  |  | 10 | 5 | 5 | 32 | 15 | 20 | 0 | 5 |

Il résulte du tableau VI que $R_4$, SCA, conforme à l'invention, est de loin le moins phytotoxique.

De plus, il apparaît qu'il y a de très grandes différences du point de vue de la phytotoxicité sur les différentes cultures, notamment sur carottes et haricots.

Le flow à base de bromoxynil sous forme de butyrate conforme à l'invention est donc, à dose égale de matière active/ha, nettement moins agressif que les produits de l'art antérieur.

A propos de ceux-ci, on retrouve, dans le cas présent, l'aggressivité plus grande du concentré émulsionnable à base d'octanoate de bromoxynil par rapport au concentré émulsionnable à base de butyrate de bromoxynil.

B - Essais en plein champ en cultures de maïs

Ces essais ont été réalisés sur trois variétés de maïs très cultivées en France et connues sous les appellations DEA, SABRINA, EVA.

Les applications ont été réalisées en post-levée entre les stades 2 à 8 feuilles, permettant ainsi de procéder à des notations qualitatives pour apprécier :
- d'une part, l'efficacité
- d'autre part, la sélectivité

des produits testés.

Onze sites ont été retenus, représentant 11 champs différents, dont 4 dans le Nord de la France, 5 dans le Sud-Est, 2 dans le Sud-Ouest.

Dans chaque essai, les produits ont été appliqués deux fois (deux répétitions) sur des parcelles élémentaires ayant chacune 5 m de large sur 10 m de long.

L'application a été réalisée en pulvérisation classique sous une pression de 0.2 MPa sur la base de 500 l de bouillie à l'ha, comme dans les essais en serre.

On a testé le susdit produit de référence $R_1$ et, à titre de composition herbicide conforme à l'invention, la dispersion stable ou flow de l'exemple 1 (référence $R_4$), la teneur étant de 400 g/l de bromoxynil sous forme butyrate.

Les doses (exprimées en équivalent bromoxynil phénol) mises en oeuvre étaient :

TABLEAU VII

| No. Réf. | Nature du produit étudié | Dose/ha en équivalent bromoxynil phénol (g) |
|---|---|---|
| $R_1$ | octanoate 240 g/l e.p. EC | 240 336 480 |
| $R_4$ | butyrate 400 g/l e.p. SCA | 348 400 600 |

La dose d'emploi peut être adaptée suivant les sites géographiques, la nature et le stade végétatif des mauvaises herbes présentes, les variétés et le stade végétatif du maïs: les doses choisies correspondent à des variations pouvant être normales dans la pratique.

Pour le produit $R_4$ conforme à l'invention, le choix de dose a été fait en pensant que ce produit pouvait être moins actif.

La dose de 336 g/ha du concentré émulsionnable à base d'octanoate est la dose considérée comme utile et nécessaire et conseillée dans la majorité des cas en France.

Cette dose d'emploi peut être adaptée suivant les sites géographiques, la nature et le stade végétatif des mauvaises herbes présentes, les variétés et le stade végétatif du maïs.

Les champs d'expérimentation ont été choisis de manière à comporter une flore pour laquelle l'usage du concentré émulsionnable de bromoxynil sous forme ester octanoïque peut normalement être recommandé en culture de maïs.

Les mauvaises herbes visées par ce type de traitement sont principalement des dicotylédones diverses (dont certaines résistantes aux triazines) aux stades jeunes avant floraison telles que Amaranthus, Atriplex, Chenopodium, Solanum, Polygonum, Matricaria, Sinapis, Raphanus, Convolvulus, mais aussi des plantes comme Equisetum sp.

Les résultats des 22 observations réalisées en moyenne 15 jours (en réalité de 14 à 18 jours) après traitement sur les 11 sites, sont réunis dans les tableaux VIII et IX.

On étudie d'abord l'efficacité générale (tableau VIII).

Cette efficacité est appréciée comme suit (sachant que 0 correspond à une efficacité nulle et 100 à la destruction complète) :

| | |
|---|---|
| ≧ 97,5 % | parfaite |
| 95 % | bonne |
| 85 % | limite de l'acceptabilité |
| ≦ 70 % | inacceptable. |

23

EP 0 306 376 B1

TABLEAU VIII

| EFFICACITE | | | | | | | |
|---|---|---|---|---|---|---|---|
| Produits essayés | Doses | | Moyenne | Fréquence des notes,en %*** | | | |
| | Produit l/ha | m.a. g/ha | en % ** | 97,5 à 100 % | 95 % | 85 % | ≤ 70 % |
| R₁ EC | 1 1,4* 2 | 240 336* 480 | 86,1 94.7 97,2 | 59 68.1 81,8 | 13,6 13,6 9 | 22,7 9 9 | 4.5 9 |
| R₄ SCA selon l'ex. 1 | 0,87 1 1,5 | 348 400 600 | 98 97 98,4 | 72.7 72,7 86,3 | 22.7 13,6 9 | 4,5 13,6 4,5 | |

\* Dose recommandée dans la profession

\*\* Moyenne des % d'efficacité sur 22 observations

\*\*\* On indique pour chaque formulation et chaque dose le pourcentage de notes "parfaite", "bonne", etc.

L'examen des résultats enregistrés montre que la formulation conforme à l'invention, à la dose de 348 g/ha d'équivalent bromoxynil, fait preuve d'une efficacité très voisine de celle du produit de référence à la dose de 1,4 l/ha soit 336 g/ha m.a., dose préconisée dans la profession comme étant la dose utile et nécessaire pour la majorité des cas.

On note par ailleurs, en rapport avec la colonne "≤ 70 %" que, pour les doses de 1 et de 1,4 l/ha, le produit de référence conduit à une efficacité plus inégale que le produit selon l'invention, qui donne donc des résultats plus homogènes.

On étudie ensuite la phytotoxicité.

C'est ici que la supériorité des formulations conformes à l'invention apparaît dans toute son étendue, confirmant les résultats déjà relevés à l'issue des essais en serre.

Les résultats des 22 observations réalisées sur les susdits 11 sites et relatives à la phytotoxicité, exprimée en % d'effet sur le feuillage en moyenne 15 jours après traitement (en réalité 14 à 18 jours), sont réunis dans le tableau IX.

Les notations concernant la phytotoxicité (0 = aucun effet et 100 = destruction totale) sont les suivantes :

| 0 à 2,5 % | phytotoxicité nulle ou considérée comme nulle |
|---|---|
| 5 % | phytotoxicité acceptable |
| 15 % | phytotoxicité à la limite de l'acceptabilité |
| 30 % | phytotoxicité inacceptable visuellement mais la culture peut se rétablir |
| 50 % | phytotoxicité inacceptable car possibilité de rétablissement de la culture pratiquement nulle. |

24

TABLEAU IX

| PHYTOTOXICITE | | | | | | | | |
|---|---|---|---|---|---|---|---|---|
| Produits essayés | Doses | | Moyenne | Fréquence des notes. en %[***] | | | | |
| | Produit l/ha | m.a. g/ha | en % [**] | 0 à 15 % | | | > à 15 % | |
| | | | | 0 à 2,5 % | 5 % | 15 % | 30 % | 50 % |
| R₁ EC | 1 | 240 | 6,4 | 63,6 | 9,0 | 18,1 | 9 | |
| | 1,4* | 336* | 12,2 | 40,9 | 18,1 | 13,6 | 22,7 | 4,5 |
| | 2 | 480 | 15,1 | 31,8 | 18,1 | 18,1 | 22,7 | 9 |
| R₄ SCA selon l'ex. 1 | 0,87 | 348 | 2,6 | 68,1 | 27,2 | 4,5 | - | - |
| | 1 | 400 | 3,1 | 77,2 | 18,1 | - | 4,5 | - |
| | 1,5 | 600 | 5,4 | 72,7 | 18,1 | - | 9 | - |

\* Dose recommandée dans la profession

\*\* Moyenne des % de phytotoxicité sur 22 observations

\*\*\* On indique pour chaque formulation et chaque dose le pourcentage de notes "parfaite", "bonne", etc.

Les résultats réunis dans le tableau IX conduisent aux constatations suivantes.

D'une part, la moyenne des % de phytotoxicité confirme que le produit selon l'invention est nettement moins phytotoxique à toutes les doses étudiées que le produit de référence.

D'autre part, l'examen de la fréquence des notes de phytotoxicité montre que, de façon inattendue, dans le cas du produit conforme à l'invention, ces notes sont regroupées pour près de 100% dans les colonnes correspondant à une phytotoxicité nulle ou acceptable ; la supériorité du produit conforme à l'invention résulte tout particulièrement de la comparaison des notes enregistrées pour la dose recommandée de 1,4 l/ha du produit de référence et de celles enregistrées pour la dose comparable, c'est-à-dire celle de 0,87 l/ha du produit de l'exemple 1.

On a également étudié, dans le cadre des essais en plein champ, la sensibilité des mauvaises herbes. On a pris trois exemples, à savoir l'Amaranthus retroflexus, le Chenopodium album et le Solanum nigrum, c'est-à-dire les seules mauvaises herbes présentant une infestation importante (plus de 100 plantes au m²) dans les 11 sites sélectionnés.

Les observations ont été effectuées aux mêmes moments que ci-dessus.

La sensibilité est exprimée en % de sensibilité, d'après l'échelle suivante :

TS : très sensible correspondant à une destruction ≥ 95 %

S : sensible correspondant à une destruction < 95 % et ≥ 85 %

MS : moyennement sensible correspondant à une destruction < 85 % et ≥ 70 %

MR-R : moyennement résistante à résistante correspondant à une destruction ≤ 70 %.

Les résultats sont réunis dans le tableau X.

TABLEAU X

| Produit essayé | Doses Produit m.a. l/ha | g/ha | Amaranthus retroflexus (4**) | | | | Chenopodium album (20**) | | | | Solanum nigrum (20**) | | | |
|---|---|---|---|---|---|---|---|---|---|---|---|---|---|---|
| | | | TS | S | MS | MR-R | TS | S | MS | MR-R | TS | S | MS | MR-R |
| | 1 | 240 | - | 100 | - | - | 78 | 11 | 6 | 6 | 83 | 6 | 6 | 6 |
| R₁ | 1,4* | 336* | 100 | - | - | - | 83 | 6 | 11 | - | 83 | 11 | 6 | |
| EC | 2 | 480 | 100 | - | - | - | 94 | 6 | - | - | 89 | - | 6 | 6 |
| R₄ SCA | 0,87 | 348 | 100 | - | - | - | 94 | 6 | - | - | 89 | - | - | 11 |
| selon | 1 | 400 | 50 | 50 | - | - | 94 | 6 | - | - | 89 | - | 11 | - |
| l'ex. 1 | 1,5 | 600 | 100 | - | - | - | 100 | - | - | - | 89 | - | - | 11 |

\* Dose recommandée

\*\* Nombre d'observations relatives au cas où la plante est présente dans les parcelles d'essais sur le total des 22 observations.

L'examen des résultats réunis dans le tableau X montre que

- sur Amaranthus les deux produits sont pratiquement identiques,
- sur Chenopode, le produit selon l'invention est supérieur,
- sur Solanum, l'efficacité est très voisine mais incomplète, la faible proportion de mauvais résultats étant due au fait que, dans l'un des sites, on a rencontré des plantes trop développées lors du traitement, d'où une sensibilité moindre.

La formulation conforme à l'invention (SCA selon l'exemple 1) montre donc à la dose de 348 g/ha d'équivalent bromoxynil une phytotoxicité nettement moindre par rapport à la formulation référencée R₁ en concentré émulsionnable utilisée à 336 g/ha d'équivalent bromoxynil, tout en ayant une efficacité globale voisine à légèrement supérieure et une action légèrement supérieure sur certaines mauvaises herbes importantes.

II. ETUDE DES PRODUITS A BASE D'IOXYNIL

A. Essais en serre

On a mis en oeuvre les produits de référence R'₁, R'₂ et R'₃ qui contiennent respectivement 240 g/l d'ioxynil sous forme d'octanoate en concentré émulsionnable, 250 g/l d'ioxynil sous forme de phénol en suspension aqueuse concentrée et 120 g/l d'ioxynil sous forme de butyrate en concentré émulsionnable.

La composition conforme à l'invention, de référence R'₄, était à base de la formulation SCA selon l'exemple 2 et contenait 400 g/l d'ioxynil sous forme de butyrate.

Dans le tableau XI, on a réuni les résultats enregistrés 15 jours après le traitement et représentant l'efficacité sur mauvaises herbes (Amaranthus, Chenopodium, Solanum et Matricaria) traitées au stade 3 feuilles.

TABLEAU XI

| Nature du produit étudié | | Dose/ha g m.a. | Efficacité sur mauvaises herbes | | | |
|---|---|---|---|---|---|---|
| | | | Amaranthus | Chenopodium | Solanum | Matricaria |
| R'$_1$ | octanoate<br>240 g/l e.p.<br>EC | 100<br>200<br>400 | 99<br>100 | 95<br>98 | 70<br>75 | 12<br>25 |
| R'$_2$ | phénol<br>250 g/l e.p.<br>SCA | 100<br>200<br>400 | 98<br>100<br>100 | 17<br>30<br>85 | 50<br>70<br>98 | 35<br>55<br>97 |
| R'$_4$ | butyrate<br>400 g/l e.p.<br>SCA | 100<br>200<br>400 | 98<br>100<br>100 | 36<br>90<br>100 | 80<br>100<br>100 | 12<br>30<br>80 |

On constate que le produit R'$_4$ conforme à l'invention est
- plus efficace que R'$_1$ et R'$_2$ sur Solanum,
- légèrement inférieur sur Matricaria par rapport au produit R'$_1$,
- inférieur par rapport à R'$_1$ sur Chenopodium.

Dans le tableau XII, on a réuni les résultats enregistrés 20 jours après le traitement et représentant la sensibilité des céréales traitées au stade 3 feuilles.

TABLEAU XII

| Nature du produit étudié | | Dose/ha g m.a. | Phytotoxicité sur | | |
|---|---|---|---|---|---|
| | | | blé Festival | blé Arminda | orge Igri |
| R'$_1$ | octanoate<br>240 g/l e.p.<br>EC | 100<br>200<br>400 | 2.5<br>7,5<br>7,5 | 0<br>0<br>0 | 0<br>5<br>15 |
| R'$_2$ | phénol<br>250 g/l e.p.<br>SCA | 100<br>200<br>400 | 0<br>10<br>10 | 2,5<br>10<br>15 | 0<br>15<br>22,5 |
| R'$_4$ | butyrate<br>400 g/l e.p.<br>SCA | 100<br>200<br>400 | 0<br>2,5<br>2,5 | 0<br>0<br>2,5 | 0<br>0<br>5 |

Il apparaît, à l'examen de ces résultats, que le produit R'$_4$ conforme à l'invention est moins agressif que le produit R'$_1$ sur blé Festival et sur orge Igri.

Dans le tableau XIII, on a réuni les résultats enregistrés 20 jours après le traitement et représentant la sensibilité des céréales traitées au stade 3 feuilles avec une association des produits R'$_1$, R'$_2$ et R'$_4$ avec l'isoproturon.

Il s'agit, pour R'$_1$, d'une association courante utilisée en culture de céréales pour additionner l'effet de l'ioxynil sur les dicotylédones adventices et l'effet de l'isoproturon sur les graminées et quelques dicotylédones, l'isoproturon étant utilisé à une dose constante de 1000 g/ha.

TABLEAU XIII

| Nature du produit étudié | Dose/ha g m.a. | Phytotoxicité sur | | |
|---|---|---|---|---|
| | | blé Festival | blé Arminda | orge Igri |
| R'$_1$ + isoproturon | 100 + 1000 | 22,5 | 22,5 | 60 |
| | 200 + 1000 | 18.5 | 30 | 80 |
| EC | 400 + 1000 | 22,5 | 40 | 97 |
| R'$_2$ + isoproturon | 100 + 1000 | 22,5 | 15 | 60 |
| | 200 + 1000 | 20 | 40 | 67 |
| SCA | 400 + 1000 | 50 | 60 | 100 |
| R'$_4$ + isoproturon | 100 + 1000 | 2,5 | 50 | 10 |
| | 200 + 1000 | 5 | 50 | 22,5 |
| SCA | 400 + 1000 | 10 | 60 | 60 |

Il apparaît, à la lecture de ces résultats, que le produit R'$_4$ associé à l'isoproturon, présente une meilleure sélectivité par rapport aux deux autres et notamment sur blé Festival et orge Igri.

B. Essais plein champ en cultures de céréales à petites graines

On a tout d'abord examiné l'efficacité des produits R'$_1$ à R'$_4$ sur une flore composite dont certains représentants sont résistants à l'ioxynil.

On a procédé de la manière indiquée pour les produits à base de bromoxynil.

Les notations globales obtenues sont faibles du fait de la présence de la susdite flore résistante.

Pour obtenir de meilleurs résultats, il faut ajouter d'autres composés ayant un spectre complémentaire pour essayer d'obtenir une destruction la plus complète possible.

Dans le tableau XIV, on a réuni les résultats (10 sites et 20 notations) enregistrés, d'une part, 20 jours[*] et, d'autre part, 40 jours[**] après le traitement.

TABLEAU XIV

| | Nature du produit | Dose/ha g m.a. | Pourcentage destruction | | Fréquence des notes | | | | |
|---|---|---|---|---|---|---|---|---|---|
| | | | | | ≥ 97,5 | | 95 | 85 | ≤ 70 |
| | | | * | ** | * | ** | | | |
| R'$_1$ | octanoate | 314 | 56,7 / 57,2 | | 0/0 | | 515 | 10/15 | 85/ 80 |
| | 240 g/l e.p. | 420 | 65,5 / 64,7 | | 0/10 | | 0/10 | 15/10 | 85/ 70 |
| | EC | 600 | 71,8 / 71,9 | | 0/20 | | 15/10 | 15/5 | 70/ 65 |
| R'$_2$ | phénol | 314 | 28,8 / 24,6 | | 0/0 | | 0/0 | 0/0 | 100/100 |
| | 250 g/l e.p. | 420 | 27,3 / 34,1 | | 0/0 | | 0/0 | 0/0 | 100/100 |
| | SCA | 600 | 41,2 / 43 | | 0/0 | | 0/0 | 0/15 | 100/ 85 |
| R'$_3$ | butyrate | 314 | 67,1 / 67,1 | | 5/5 | | 10/20 | 15/10 | 70/ 65 |
| | 120 g/l e.p. | 420 | 69,8 / 71,5 | | 15/30 | | 16/5 | 0/10 | 70/ 55 |
| | EC | 600 | 74 / 79,9 | | 10/30 | | 10/5 | 25/10 | 55/ 55 |
| R'$_4$ | butyrate | 314 | 56,5 / 63,2 | | 0/0 | | 5/5 | 20/25 | 75/ 70 |
| | 400 g/l e.p. | 420 | 60,8 / 72,7 | | 5/10 | | 5/5 | 15/25 | 75/ 40 |
| | SCA | 600 | 73 / 80,5 | | 15/25 | | 5/10 | 25/20 | 55/ 45 |

Le produit de référence R'$_2$, SCA, à base d'ioxynil sous forme phénol est peu actif (moyennes très basses, aucune efficacité ne dépassant 70%).

Les produits à base de butyrate R'$_3$ (EC) et R'$_4$ (SCA) sont supérieurs à la formulation R'$_1$ (EC à base d'octanoate).

La formulation R'$_4$ est très voisine mais légèrement moins performante que la formulation R'$_3$.

On a étudié ensuite la sensibilité des mauvaises herbes à l'égard des susdits produits.

Les résultats, exprimés en % des différents classements de sensibilité, sont réunis dans le tableau XV.

TABLEAU XV

| Nature du produit | | Dose m.a. g/ha ** | Papaver rhoeas (12 notes) | | | | Veronica hederifolia (18 notes) | | | | Stellaria media (6 notes) | | | |
|---|---|---|---|---|---|---|---|---|---|---|---|---|---|---|
| | | | TS | S | MS | MR-R | TS | S | MS | MR-R | TS | S | MS | MR-R |
| A'$_1$ | octanoate 240 g/l e.p. EC | 314 | 41,6 | 8,3 | 25 | 25 | 39 | 5,5 | 38,8 | 22,2 | 16,6 | 0 | 16,6 | 16,6 |
| | | * 420 | 50 | 8,3 | 25 | 16,6 | 44,4 | 16,6 | 16,6 | 22,2 | 33,3 | 33,3 | 16,6 | 16,6 |
| | | 628 | 58,3 | 8,3 | 33,3 | 0 | 44,4 | 16,6 | 33,3 | 5,5 | 50 | 16,6 | 16,6 | 16,6 |
| R'$_2$ | phénol 250 g/l e.p. SCA | 314 | 16,6 | 0 | 8,3 | 75 | 11,1 | 0 | 11,1 | 77,7 | 0 | 0 | 16,6 | 83,3 |
| | | 420 | 16,6 | 8,3 | 25 | 50 | 11,1 | 5,5 | 33,3 | 50 | 0 | 0 | 16,6 | 83,3 |
| | | 628 | 33,3 | 16,6 | 33,3 | 16,6 | 11,1 | 5,5 | 44,4 | 38,8 | 0 | 0 | 16,6 | 83,3 |
| R'$_3$ | butyrate 120 g/l e.p. EC | 314 | 75 | 25 | 0 | 0 | 16,6 | 44,4 | 22,2 | 16,6 | 50 | 16,6 | 16,6 | 16,6 |
| | | 420 | 91,6 | 8,3 | 0 | 0 | 33,3 | 27,7 | 38,8 | 0 | 33,3 | 50 | 16,6 | 0 |
| | | 628 | 100 | | | | 55,5 | 22,2 | 22,2 | 0 | 66,6 | 16,6 | 16,6 | 0 |
| R'$_4$ | butyrate 400 g/l e.p. SCA | 314 | 66,6 | 33,3 | 0 | 0 | 33,3 | 27,7 | 27,7 | 11,8 | 33,3 | 16,6 | 33,3 | 16,6 |
| | | 420 | 100 | 0 | 0 | 0 | 44,4 | 27,7 | 16,6 | 11,8 | 66,6 | 16,6 | 16,6 | 0 |
| | | 628 | 100 | 0 | 0 | 0 | 55,5 | 11,1 | 33,3 | 0 | 83,3 | 0 | 16,6 | 0 |

* Dose autorisée à la vente
** Dose/ha en équivalent bromoxynil

Sur les trois plantes testées, il est possible de faire une comparaison intéressante relativement aux produits mis en expérimentation.

Le produit R'$_2$ montre une très faible activité sans intérêt pratique en emploi seul.

Les produits R'$_3$ et R'$_4$ ont une activité supérieure par rapport à la formulation R'$_1$.

Cette différence est très nette sur Papaver, nette sur Veronica et Stellaria.

Il n'y a pas de différence très marquée entre les deux produits R'$_3$ et R'$_4$.

Des résultats qui précèdent, il apparaît que le produit R'$_4$ comme le produit R'$_3$ présente la particularité, par rapport à la formulation R'$_1$, d'avoir une meilleure efficacité sur certaines plantes; cette meilleure efficacité se traduit par un pourcentage de destruction plus important par exemple sur Papaver, ce qui est surprenant et nouveau, et par une meilleure régularité sur des plantes présentes, l'éventail de réaction par exemple sur Papaver, Veronica et Stellaria étant nettement plus resserré.

D'un point de vue encore plus général, les produits conformes à l'invention et notamment ceux à base de butyrate, montrent une efficacité nettement supérieure, à dose égale d'équivalent bromoxynil, aux flows à base de phénol d'oxynil et voisine de celle des formulations classiques en concentré émulsionnable à base d'esters, notamment l'ester octanoïque; ils montrent aussi, dans de nombreux essais, une meilleure sélectivité sur des cultures où souvent, suivant les conditions agronomiques de chaque essai, la sélectivité des produits connus est marginale et à la limite de l'acceptabilité aux doses efficaces.

La susdite sélectivité marginale des produits connus est souvent constatée:
- sur de nombreuses graminées: graminées prairiales ou ornementales, ou céréales telles le maïs et, par extension, le sorgho et le riz, mais aussi sur certaines céréales à paille telles que le blé, l'orge, l'avoine, le triticale,
- sur diverses cultures comme celles de la famille des papilionacées telles par exemple la luzerne ou certaines cultures légumières telles que par exemple le pois,
- sur des cultures de la famille des liliacées ou apparentées comme l'oignon, le poireau, l'ail, l'échalote.

Les produits conformes à l'invention permettent de réaliser des traitements herbicides à des doses voisines de celles utilisées pour les concentrés émulsionnables, mais améliorent, par rapport à ces derniers, dans de très nombreux cas, la sélectivité sur de nombreuses cultures où, avec ces concentrés émulsionnables, la sélectivité est souvent marginale.

**Revendications**

1.  Dispersion aqueuse ou hydroalcoolique stable, ou flow aqueux, le terme hydroalcoolique désignant une dispersion qui contient un ou plusieurs alcools du type glycol, par exemple l'éthylèneglycol, le propylèneglycol ou le butoxyéthanol, la proportion de ces glycols dans la dispersion allant de 1 à 10% en poids, de préférence de 3 à 7%, ladite dispersion qui est à base d'au moins un dérivé d'oxynil, le terme oxynil désignant le 3,5-dibromo-4-hydroxybenzonitrile ou bromoxynil et le 3,5-diiodo-4-hydroxy-benzonitrile ou ioxynil, étant caractérisée par le fait que le dérivé d'oxynil est constitué par un ester de point de fusion supérieur à 65°C.

2.  Composition herbicide caractérisée par le fait qu'elle comporte une dispersion aqueuse ou hydroalcoolique stable, ou flow aqueux, selon la revendication 1.

3.  Composition herbicide selon la revendication 2, caractérisée par le fait qu'elle comporte de plus un flow à base d'une ou plusieurs triazines et/ou d'urées substituées et/ou d'amides et/ou de diphényléthers et/ou d'un ou plusieurs dérivés de l'acide benzoïque et/ou d'un ou plusieurs dérivés picoliniques.

4.  Composition herbicide selon la revendication 3, caractérisée par le fait que les triazines sont choisies dans le groupe comprenant l'atrazine, la simazine, la métribuzine et la cyanazine, la terbutryne et la terbuthylazine, que les urées substituées sont choisies dans le groupe comprenant le chlortoluron, l'isoproturon, le diuron, le néburon et le méthabenzthiazuron, que les amides sont choisies dans le groupe comprenant le métolachlore, le métazachlore, le diflufenican et l'isoxaen, que le diphényléther est le bifénox ou le chlométhoxynil, que le dérivé de l'acide benzoïque est le dicamba et que le dérivé picolinique est le clopyralide.

5.  Composition herbicide selon l'une des revendications 2 à 4, caractérisée par le fait qu'elle comporte un autre herbicide sous forme d'une solution aqueuse n'exerçant aucun effet hydrotrope solubilisant sur l'ester d'oxynil, notamment une solution aqueuse d'aminotriazole et/ou une solution aqueuse de glyphosate.

6.  Dispersion selon la revendication 1, caractérisée par le fait qu'elle comporte des agents tensioactifs, des produits dispersants, des produits épaississants et/ou des colloïdes protecteurs.

7.  Composition herbicide selon l'une des revendications 2 à 5, caractérisée par le fait qu'elle comporte des agents tensio-actifs, des produits dispersants, des produits épaississants et/ou des colloïdes protecteurs.

8.  Dispersion selon la revendication 1, caractérisée par le fait qu'elle comprend, à titre d'esters d'oxynil, le butyrate de bromoxynil dont le point de fusion est de 82°C et/ou le butyrate d'ioxynil dont le point de fusion est de 118°C.

9.  Dispersion selon la revendication 1, caractérisée par le fait qu'elle comprend, à titre d'esters d'oxynil,
    -   les acétate, propionate, isobutyrate et pivalate de bromoxynil dont les points de fusion sous la forme technique sont respectivement de 154°C, 115°C, 103°C et 118°C,
    -   les acétate, propionate, isobutyrate et pivalate d'ioxynil dont les points de fusion sous la forme technique sont respectivement de 204°C, 157°C, 138°C et 142°C.

10. Composition herbicide selon l'une des revendications 2 à 5 et 7, caractérisée par le fait que l'ester d'oxynil est le butyrate de bromoxynil dont le point de fusion est de 82°C.

11. Composition herbicide selon l'une des revendications 2 à 5 et 7, caractérisée par le fait que l'ester d'oxynil est le butyrate d'ioxynil dont le point de fusion est de 118°C.

**12.** Composition herbicide selon l'une des revendications 2 à 5 et 7, caractérisée par le fait que l'ester d'oxynil est choisi dans le groupe comprenant
- les acétate, propionate, isobutyrate et pivalate de bromoxynil dont les points de fusion sous la forme technique sont respectivement de 154°C, 115°C, 103°C et 118°C,
- les acétate, propionate, isobutyrate et pivalate d'ioxynil dont les points de fusion sous la forme technique sont respectivement de 204°C, 157°C, 138°C et 142°C.

**13.** Composition herbicide selon l'une des revendications 2 à 5, 7 et 10 à 12, caractérisée par le fait que la teneur globale en matière active est d'au plus 600 g/l.

**14.** Composition herbicide selon l'une des revendications 2 à 5, 7 et 10 à 13, caractérisée par le fait qu'elle est appliquée aux cultures sous forme de bouillies.

**15.** Application de la composition herbicide selon l'une des revendications 2 à 5, 7 et 10 à 14 aux cultures de maïs, à la vigne et aux vergers, aux céréales à paille, aux graminées prairiales, aux cultures légumières, aux légumineuses et en tant que désherbants totaux.

**16.** Procédé de traitement herbicide sélectif des cultures du groupe comprenant celles du maïs, des vignes et vergers, des céréales à paille, des graminées prairiales, des cultures légumières et des légumineuses, caractérisé par le fait qu'on leur applique une quantité efficace de la composition herbicide selon l'une des revendications 2 à 5 et 10 à 14.

**17.** Procédé selon la revendication 16, caractérisé par le fait que l'application est réalisée par pulvérisation de bouillies en quantités pouvant varier de 20 l à 1000 l de bouillie/ha et, plus particulièrement,
- de 20 à 80 l de bouillie/ha dans le cas des applications terrestres dites à "bas volume" ou dans le cas des applications aériennes,
- de 150 à 500 l de bouillie/ha dans le cas des applications terrestres classiques.

## Claims

**1.** Stable aqueous or aqueous alcoholic dispersion or aqueous flow, the term "aqueous alcoholic" denoting a dispersion containing one or several alcohols of the glycol type, for example ethyleneglycol, propyleneglycol and butoxyethanol, the proportion of these glycols in the dispersion ranging from 1 to 10% by weight, preferably from 3 to 7%, said dispersion based on at least one oxynil derivative, the term oxynil denoting 3.5-dibromo-4-hydroxybenzonitrile or bromoxynil and 3.5.-diiodo-4-hydroxybenzonitrile or ioxynil, being characterized by the fact that the oxynil derivative is an ester of melting point higher than 65°C.

**2.** Herbicidal composition characterized by the fact that it comprises a stable aqueous or aqueous alcoholic dispersion, or aqueous flow, according to claim 1.

**3.** Herbicidal composition according to claim 2, characterized by the fact that it comprises in addition a flow based on one or several triazines and/or substituted ureas and/or amides and/or diphenylethers and/or one or several derivatives of benzoic acid and/or one or several picolinic derivatives.

**4.** Herbicidal composition according to claim 3, characterized by the fact that the triazines are selected from the group comprising atrazine, simazine, metribuzine and cyanazine, terbutryne and terbuthylazine, that the substituted ureas are selected from the group comprising chlortoluron, isoproturon, diuron, neburon and methabenzthiazuron, that the amides are selected from the group comprising metolochlore, metazachlore, diflufenican and isoxaben, that the diphenylether is bifenox or chlomethoxynil, that the derivative of benzoic acid is dicamba and that the picolinic derivative is clopyralide.

**5.** Herbicidal composition according to one of claims 2 to 4, characterized by the fact that it comprises another herbicide in the form of an aqueous solution not exerting any solubilizing hydrotropic effect on the oxynil ester, particularly an aqueous aminotriazole solution and/or an aqueous solution of glyphosate.

**6.** Dispersion according to claim 1, characterized by the fact that it comprising surfactive agents, dispersing agents, thickening products and/or protective colloids.

7. Herbicidal composition according to one of claims 2 to 5, characterized by the fact that it comprises surfactive agents, dispersing agents, thickening products and/or protective colloids.

8. Dispersion according to claim 1, characterized by the fact that it omprises, as oxynil esters, bromoxynil butyrate whose melting point is 82°C and/or ioxynil butyrate whose melting point is 118°C.

9. Dispersion according to claim 1, characterized by the fact that it comprises, as oxynil esters,
   - technical grade acetate, propionate, isobutyrate and pivalate of bromoxynil whose melting points are respectively 154°C, 115°C, 103°C and 118°C,
   - technical grade acetate, propionate, isobutyrate and pivalate of ioxynil whose melting points are respectively 204°C, 157°C, 138°C and 142°C.

10. Herbicidal composition according to one of claims 2 to 5 and 7, characterized by the fact that the oxynil ester is butyrate of bromoxynil whose melting point is 82°C.

11. Herbicidal composition according to one of claims 2 to 5 and 7, characterized by the fact that the oxynil ester is butyrate of ioxynil whose melting point is 118°C.

12. Herbicidal composition according to one of claims 2 to 5 and 7, characterized by the fact that the oxynil ester is selected from the group comprising
   - technical grade acetate, propionate, isobutyrate and pivalate of bromoxynil whose melting points are respectively 154°C, 115°C, 103°C and 118°C,
   - technical grade acetate, propionate, isobutyrate and pivalate of ioxynil whose melting points are respectively 204°C, 157°C, 138°C and 142°C.

13. Herbicidal composition according to one of claims 2 to 5, 7 and 10 to 12, characterized by the fact that the overall content of active ingredient is at the most 600 g/l.

14. Herbicidal composition according to one of claims 2 to 5, 7 and 10 to 13, characterized by the fact that it is used for application to crops in the form of spray-mixtures.

15. Use of the herbicidal composition according to one of claims 2 to 5, 7 and 10 to 14, for the treatment of crops of the group comprising maize or corn, vineyards and orchards, straw cereals, meadow grasses, vegetable crops, leguminous crops and as total herbicides.

16. Process for the selective herbicidal treatment of crops of the group comprising maize, vineyards and orchards, straw cereals, meadow grasses, vegetable crops, leguminous crops, characterized by the fact that an efficient amount of the herbicidal composition according to one of claims 2 to 5, 7 and 10 to 14 is applied to the said crops.

17. Process according to claim 16, characterized by the fact that the application is carried out by spraying to the crops of spray-mixtures in an amount from 20 l to 1000 l spray-mixture/ha, more especially
   - from 20 to 80 l of spray-mixture/ha in the case of ground applications called "low volume" or in the case of aerial applications,
   - from 150 to 500 l of spray-mixture/ha in the case of conventional ground applications.

**Patentansprüche**

1. Stabile, wäßrige oder wäßrig-alkoholische Dispersion oder stabiles, wäßriges Suspensionskonzentrat, wobei der Ausdruck "wäßrig-alkoholisch" eine Dispersion bezeichnet, welche einen oder mehrere Alkohole vom Glykoltyp, beispielsweise Ethylenglykol, Propylenglykol oder Butoxyethanol, enthält, worin der Anteil dieser Glykole in der Dispersion von 1 bis 10 Gew.-%, vorzugsweise von 3 bis 7 Gew.-% beträgt, welche Dispersion auf Basis von wenigstens einem Oxynilderivat, wobei der Ausdruck "Oxynil" 3,5-Dibrom-4-hydroxybenzonitril oder Bromoxynil und 3,5-Diiod-4-hydroxybenzonitril oder Ioxynil bezeichnet, dadurch gekennzeichnet, daß das Oxynilderivat von einem Ester mit einem Schmelzpunkt über 65°C gebildet wird.

**2.** Herbizide Zusammensetzung, dadurch gekennzeichnet, daß sie eine stabile, wäßrige oder wäßrig-alkoholische Dispersion, oder ein stabiles, wäßriges Suspensionskonzentrat, nach Anspruch 1 umfaßt.

**3.** Herbizide Zusammensetzung nach Anspruch 2, dadurch gekennzeichnet, daß sie darüber hinaus ein Suspensionskonzentrat auf Basis von einem oder mehreren Triazinen und/oder von einem oder mehreren substituierten Harnstoffen und/oder von einem oder mehreren Amiden und/oder von Diphenylethern und/oder von einem oder mehreren Benzoesäurederivaten und/oder von einem oder mehreren Picolinderivaten enthält.

**4.** Herbizide Zusammensetzung nach Anspruch 3, dadurch gekennzeichnet, daß die Triazine von der Atrazin, Simazin, Metribuzin und Cyanazin, Terbutryne und Terbuthylazin umfassenden Gruppe ausgewählt sind, daß die substituierten Harnstoffe von der Chlortoluron, Isoproturon, Diuron, Neburon und Methabenzthiazuron umfassenden Gruppe ausgewählt sind, daß die Amide von der Metolachlor, Metazachlor, Diflurenican und Isoxaen umfassenden Gruppe ausgewählt sind, daß es sich bei dem Diphenylether um Bifenox oder Chlomethoxynil handelt, daß das Benzoesäurederivat Dicamba ist und daß es sich bei dem Picolinderivat um Clopyralid handelt.

**5.** Herbizide Zusammensetzung nach einem der Ansprüche 2 bis 4, dadurch gekennzeichnet, daß sie ein weiteres Herbizid in Form einer wäßrigen Lösung umfaßt, welche keine hydrotrope solubilisierende Wirkung auf den Oxynilester ausübt, insbesondere eine wäßrige Aminotriazollösung und/oder eine wäßrige Glyphosatlösung.

**6.** Dispersion nach Anspruch 1, dadurch gekennzeichnet, daß sie grenzflächenaktive Mittel, Dispergiermittel, Verdickungsmittel und/oder Schutzkolloide umfaßt.

**7.** Herbizide Zusammensetzung nach einem der Ansprüche 2 bis 5, dadurch gekennzeichnet, daß sie grenzflächenaktive Mittel, Dispergiermittel, Verdickungsmittel und/oder Schutzkolloide umfaßt.

**8.** Dispersion nach Anspruch 1, dadurch gekennzeichnet, daß sie als Oxynilester Bromoxynilbutyrat, dessen Schmelzpunkt 82° C beträgt,und/oder Ioxynilbutyrat, dessen Schmelzpunkt 118° C beträgt, enthält.

**9.** Dispersion nach Anspruch 1, dadurch gekennzeichnet, daß sie als Oxynilester
- Bromoxynilacetat, -propionat, -isobutyrat und -pivalat, deren Schmelzpunkte in der technischen Qualität jeweils 154° C, 115° C, 103° C und 118° C betragen,
- Ioxynilacetat, -propionat, -isobutyrat und -pivalat, deren Schmelzpunkte in der technischen Qualität jeweils 204° C, 157° C, 138° C und 142° C betragen,
umfaßt.

**10.** Herbizide Zusammensetzung nach einem der Ansprüche 2 bis 5 und 7, dadurch gekennzeichnet, daß der Oxynilester Bromoxynilbutyrat ist, dessen Schmelzpunkt 82° C beträgt.

**11.** Herbizide Zusammensetzung nach einem der Ansprüche 2 bis 5 und 7, dadurch gekennzeichnet, daß der Oxynilester Ioxynilbutyrat ist, dessen Schmelzpunkt 118° C beträgt.

**12.** Herbizide Zusammensetzung nach einem der Ansprüche 2 bis 5 und 7, dadurch gekennzeichnet, daß der Oxynilester von der Gruppe ausgewählt ist, welche
- Bromoxynilacetat, -propionat, -isobutyrat und -pivalat, deren Schmelzpunkte in der technischen Qualität jeweils 154° C, 115° C, 103° C und 118° C betragen,
- Ioxynilacetat, -propionat, -isobutyrat und -pivalat, deren Schmelzpunkte in der technischen Qualität jeweils 204° C, 157° C, 138° C und 142°C betragen,
umfaßt.

**13.** Herbizide Zusammensetzung nach einem der Ansprüche 2 bis 5, 7 und 10 bis 12, dadurch gekennzeichnet, daß der Gesamtgehalt an wirksamem Material höchstens 600 g/,l beträgt.

**14.** Herbizide Zusammensetzung nach einem der Ansprüche 2 bis 5, 7 und 10 bis 13, dadurch gekennzeichnet, daß sie auf die Kulturen in Form von Aufschlämmungen aufgebracht wird.

**15.** Aufbringung der herbiziden Zusammensetzung nach einem der Ansprüche 2 bis 5, 7 und 10 bis 14 auf Maiskulturen, auf Wein und Obst, auf strohliefernde Cerealien, auf Wiesengräser, auf Gemüsekulturen, auf Leguminosen und als Totalherbizide.

**16.** Verfahren zur selektiven herbiziden Behandlung von Kulturen der Gruppe, die jene von Mais, Wein und Obst, strohliefernden Cerealien, Wiesengräsern, Gemüsekulturen und Leguminosen unfaßt, dadurch gekennzeichnet, daß man darauf eine wirksame Menge der herbiziden Zusammensetzung nach einem der Ansprüche 2 bis 5 und 10 bis 14 aufbringt.

**17.** Verfahren nach Anspruch 16, dadurch gekennzeichnet, daß die Aufbringung durch Zerstäuben von Aufschlämmungen in solchen Mengen erfolgt, welche von 20 l bis 1000 l Aufschlämmung/ha und ganz besonders
- von 20 bis 80 l Aufschlämmung/ha im Fall von terrestischen, sogenannten "Niedervolumen"-Aufbringungen oder im Fall von Aufbringungen aus dem Flugzeug,
- von 150 bis 500 l Aufschlämmung/ha im Fall von klassischen terrestrischen Aufbringungen,
variieren können.